(19) Europäisches Patentamt
European Patent Office
Office européen des brevets

(11) Veröffentlichungsnummer: **0 132 577**
**B1**

(12) # EUROPÄISCHE PATENTSCHRIFT

(45) Veröffentlichungstag der Patentschrift: **26.11.86**

(21) Anmeldenummer: **84106942.0**

(22) Anmeldetag: **18.06.84**

(51) Int. Cl.⁴: **G 03 C 5/54,** C 09 B 29/10, C 09 B 29/24 // C09B29/033

(54) **Farbfotografisches Aufzeichnungsmaterial mit einem Farbabspalter für blaugrüne Farbstoffe, ein mit diesen Farbstoffen erzeugtes Farbbild und die Farbstoffe selbst.**

(30) Priorität: **28.06.83 DE 3323282**

(43) Veröffentlichungstag der Anmeldung: **13.02.85 Patentblatt 85/7**

(45) Bekanntmachung des Hinweises auf die Patenterteilung: **26.11.86 Patentblatt 86/48**

(84) Benannte Vertragsstaaten: **CH DE FR LI NL**

(56) Entgegenhaltungen:
**DE-A-2 354 686**
**FR-A-2 222 379**
**US-A-4 199 354**
**US-A-4 386 149**

(73) Patentinhaber: **AGFA- GEVAERT Aktiengesellschaft, D-5090 Leverkusen 1 (DE)**

(72) Erfinder: **Bergthaller, Peter, Dr., Leuchter Gemark 5a, D-5060 Bergisch Gladbach 2 (DE)**
Erfinder: **Stolzenburg, Rudolf, Dipl.- Ing., Bogenstrasse 27, D-4018 Langenfeld (DE)**
Erfinder: **Marx, Paul, Dr., Nauener Strasse 25, D-5090 Leverkusen 1 (DE)**
Erfinder: **Hamprecht, Rainer, Dr., Im Kerberich 25, D-5068 Odenthal (DE)**

**EP 0 132 577 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die Erfindung betrifft ein farbfotografisches Aufzeichnungsmaterial für die Herstellung farbiger Bilder nach dem Farbdiffusionsübertragungsverfahren, das zugeordnet zu mindestens einer lichtempfindlichen Silberhalogenidemulsionsschicht eine nicht diffundierende farbgebende Verbindung enthält, aus der bei der Entwicklung ein diffusionsfähiger blaugrüner Farbstoff freigesetzt wird.

Das Farbdiffusionsübertragungsverfahren beruht darauf, daß bei der Entwicklung in einem lichtempfindlichen Element nach Maßgabe einer vorangegangenen Belichtung eine bildmäßige Verteilung diffusionsfähiger Farbstoffe erzeugt und auf ein Bildempfangselement übertragen wird.

Sehr wichtig ist hierbei, daß die Farbstoffe in der Bildempfangsschicht in ausreichendem Maße festgelegt werden können und daß sie außerdem ausgezeichnete spektrale Eigenschaften und hervorragende Stabilität gegen Licht und Wärme aufweisen.

Blaugrüne Farbstoffe für das Farbdiffusionsverfahren, die als Chromophor einen Phthalocyaninrest - bevorzugt in Form des Kupferkomplexes - enthalten, sind z.B. aus DE-A-31 01 036 bekannt.

Nachteilig an den an sich außerordentlich stabilen Farbstoffen ist ihre gegenüber den üblicherweise verwendeten Gelb- und Purpurfarbstoffen verminderte Diffusionsfähigkeit. Diese hat zur Folge, daß der Aufbau des Farbübertrages während der Übertragszeit mit einem Farbgang von rot nach neutral verbunden ist und eine genaue Einhaltung der optimalen Übertragszeit erfordert.

Schnell diffundierende blaugrüne Farbstoffe für das Farbdiffusionsverhalten sind in der Reihe der 4-(4-Nitrophenylazo)-1-naphthole beschrieben worden, z.B. in DE-A-24 06 653 und DE-A-28 53 584.

Die in DE-A- 24 06 653 genannten Farbstoffe liegen nach der Abspaltung vom diffusionsfestmachenden Trägerrest in Form eines anionischen Chromophors vor, diffundieren so in die Bildempfangsschicht und werden auch auf dem Beizmittel in der Form des Farbstoffanions festgelegt. Anionische Farbstoffe zeigen allgemein geringe Lichtechtheiten. Es überrascht daher nicht, daß die blaugrünen anionischen Farbstoffe aus der Reihe der 4-(4-Nitrophenylazo)-naphthole eine unbefriedigende Lichtechtheit aufweisen. Zur Behebung dieses Nachteils sind bereits in DE-A-28 53 584 Farbstoffe aus der gleichen Klasse beschrieben, die durch eine zusätzliche Carbamoylsubstitution in ortho-Stellung zur OH-Gruppe bessere Lichtechtheit aufweisen.

Eine Verbesserung der Lichtechtheit sowie der allgemeinen Beständigkeit gegen Wärme und Feuchtigkeit, vor allem in einem abgeschlossenen Schichtverband, einem sogenannten "Monopack", wird durch die Verwendung von Monoazofarbstoffen aus der Reihe der Nitrophenylazonaphthsultame erreicht, die in DE-A-28 06 196 als blaugrüne Farbstoffe für Farbdiffusionsverfahren beschrieben sind.

Allen diesen Farbstoffen ist gemeinsam, daß die Anwesenheit einer Nitrogruppe in para-Position zur Azogruppe den Chromophor gegen Angriff durch Reduktionsmittel labilisiert.

Reduktionsmittel sind jedoch, ganz abgesehen von den Entwicklersubstanzen, in praktisch allen Aufzeichnungsmaterialien für das Farbdiffusionsübertragungsverfahren zur Übernahme bestimmter Funktionen vorhanden. Zum Beispiel enthalten die Zwischenschichten zwischen den einzelnen einer bestimmten Teilfarbe zugeordneten Schichtpaketen üblicherweise Reduktionsmittel, insbesondere solche aus der Reihe der mono- oder dialkylierten Hydrochinone, die zum Abfangen von Entwickleroxidationsprodukten befähigt und dementsprechend reaktiv sind.

Ebenso enthalten Aufzeichnungsmaterialien, die reduzierbare Farbabspalter enthalten, in Zuordnung zu diesen sogenannte Elektronendonor-Verbindungen (ED-Verbindungen) oder deren Vorläufer. Zur Erläuterung ist in diesem Zusammenhang auf folgende Anmeldungen zu verweisen: EP-A-0 004 399, US-A-4 139 379, US-A-4 278 750, DE-A-30 14 669, EP-A-0 38 032, DE-A- 30 08 588 und DE-A-3 006 268.

Es ist bekannt, daß 4-Nitrophenylazofarbstoffe leichter als andere Monoazofarbstoffe durch Reduktionsmittel angegriffen werden. Schon der kurze Kontakt zwischen Reduktionsmittel und Chromophor während der Bildentstehungszeit kann bei Gegenwart eines stark alkalischen Verarbeitungsmediums ausreichen, den blaugrünen Farbstoff zu kürzerwellig absorbierenden Verbindungen unbekannter Struktur zu verändern, sodaß seine Nuance von Blaugrün zu Blau oder sogar Violett verändert wird.

Es ist daher wünschenswert, für das Farbdiffusionsverfahren leichtdiffundierende blaugrüne Monoazofarbstoffe bereitzustellen, die keine 4-Nitrophenylazogruppe enthalten und daher weniger reduktionsempfindlich sind.

Der Erfindung liegt die Aufgabe zugrunde neue farbgebende Verbindungen für das Farbdiffusionsübertragsverfahren anzugeben, aus denen bei der fotografischen Entwicklung diffundierende blaugrüne Farbstoffe in Freiheit gesetzt werden, die eine verbesserte Lichtechtheit, verbesserte spektrale Eigenschaften und verbesserte Beständigkeit gegen Reduktionsmittel aufweisen.

Gegenstand der Erfindung ist ein farbfotografisches Aufzeichnungsmaterial für die Herstellung farbiger Bilder nach dem Farbdiffusionsübertragungsverfahren, das zugeordnet zu mindestens einer lichtempfindlichen Silberhalogenidemulsionsschicht eine nicht diffundierende farbgebende Verbindung (Farbabspalter) enthält, aus der unter den Bedingungen der alkalischen Entwicklung als Funktion der Entwicklung der Silberhalogenidemulsionsschicht ein diffusionsfähiger Azofarbstoff freigesetzt wird, dadurch gekennzeichnet, daß der Azofarbstoff der folgenden Formel I entspricht:

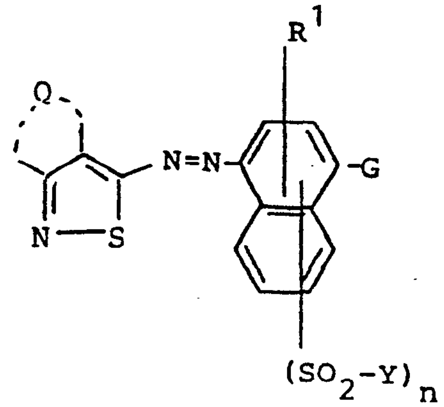

I,

worin bedeuten

Q den zur Vervollständigung eines ankondensierten Benzol- oder Thiophenrestes, welcher zusätzliche Gruppen mit Elektronenakzeptorcharakter enthält, oder zur Vervollständigung eines ankondensierten Pyridin-, Pyrimidin-, Pyridazin-, Pyrazin- oder Thiazolringes erforderlichen Molekülrest; G -OH oder Acyloxy;

$R^1$ H oder einen oder zwei gleiche oder verschiedene Reste und zwar Halogen, insbesondere Chlor, Acyl, Acylamino oder -CN;

Y H, -OH, eine gegebenenfalls durch Alkyl und oder Aryl substituierte Aminogruppe, eine cyclische Aminogruppe, oder eine Gruppe der Formel $-NH-SO_2-R^2$;

$R^2$ Alkyl, Aryl, eine gegebenenfalls zweifach durch Alkyl substituierte Aminogruppe oder eine cyclische Aminogruppe;

n 0, 1 oder 2.

Der Rest G kann unter den Bedingungen der alkalischen Entwicklung auch in anionischer Form vorliegen. Desgleichen kann der Rest G zunächst in acylierter Form als -O-Acylgruppe vorliegen, die unter den Bedingungen der alkalischen Entwicklung hydrolysiert wird.

Falls ein Farbstoff mehr als einen Rest Y enthält (n = 2), können diese gleich oder verschieden sein.

Die durch Q vervollständigten ankondensierten Benzolringe oder heterocyclischen Ringe können weiter substituiert sein, z.B. mit Halogen, Alkyl, Alkoxy, Alkylthio oder carbocyclischen oder heterocyclischen aromatischen Ringen, z.B. Phenyl, Furyl oder Thienyl oder mit Substituenten mit Elektronenakzeptorcharakter wie Cyan, Nitro, Carboxy, Carbalkoxy, Carbamoyl, Alkylsulfinyl oder Alkylsulfonyl. Insbesondere die ankondensierten Benzolringe bzw. Thiophenringe enthalten solche elektronenanziehenden Substituenten.

Die gegebenenfalls in $R^1$ enthaltenen bzw. in der Definition von Y genannten Alkylgruppen enthalten vorzugsweise nicht mehr als 4 C-Atome; bevorzugte Beispiele sind Methyl, Ethyl, n-Propyl, Isopropyl, n-Butyl.

Die gegebenenfalls in $R^1$ enthaltenen bzw. in der Definition von Y genannten Arylgruppen sind vorzugsweise Phenylgruppen oder Naphthylgruppen; sie können weiter substituiert sein, z.B. durch Alkyl, Alkoxy, Acylamino, Sulfamoyl, Sulfinat, jedoch umfassen sie einschließlich solcher Substituenten vorzugsweise nicht mehr als 17 C-Atome.

Bei der erwähnten cyclischen Aminogruppe handelt es sich um 5- bis 7-gliedrige cyclische Aminogruppen, z.B. die Pyrrolidin-, Piperidin- oder Morpholingruppe.

Acylreste (Acylamino) leiten sich allgemein ab von aliphatischen oder aromatischen Carbon- oder Sulfonsäuren, von Carbaminsäuren oder Sulfaminsäuren oder von Kohlensäurehalbestern.

Weiterhin verfügen die Farbstoffe der Formel I, z.B. in Form von G oder in Form einiger der bereits bei $R^1$ und Y erwähnten Gruppen oder in Form von Substituenten, die gegebenenfalls über ein geeignetes Bindeglied an eine dieser Gruppen gebunden sind, über geeignete funktionelle Gruppen zur Einstellung eines günstigen Diffusions- und Beizverhaltens, z.B über anionsische oder anionisierbare Gruppen, wie Sulfonat-, Sulfinat-, phenolat-, Naphtholat-, Carboxylat-, Disulfimid- oder Sulfamoylgruppen, sowie über eine funktionelle Gruppe, die aus der Aufspaltung einer Bindung an einen mit einer Ballastgruppe versehenen Trägerrest resultiert und für die Art des Trägerrestes und die Anknüpfung daran charakteristisch ist. Die zuletzt genannte funktionelle Gruppe kann identisch sein mit einer der zuvor genannten das Diffusions- und Beizverhalten modifizierenden Gruppen. Die erwähnte funktionelle Gruppe kann beispielsweise an einen Alkyl- oder Arylrest gebunden sein, der seinerseits Bestandteil eines der unter $R^1$ und Y erwähnten Substituenten ist.

Gegenstand der Erfindung sind auch Monoazofarbstoffe der Formel I

Die Formel I bezieht sich auf die erfindungsgemäßen bei der Entwicklung freigesetzten diffusionsfähigen Farbstoffe. Diese werden freigesetzt aus entsprechenden eingelagerten nichtdiffundierenden farbgebenden Verbindungen (Farbabspalter). Hierbei handelt es sich um Verbindungen, in denen ein Farbstoffrest gemäß Formel I an einen mindestens eine Ballastgruppe enthaltenden Trägerrest CAR gebunden ist, gegebenenfalls unter Zwischenschaltung eines geeigneten Bindegliedes.

Die Anknüpfung des Farbstoffes der Formel I an den Trägerrest kann beispielsweise über einen der

Substituenten $R^1$; über G oder über eine der vorhandenen Gruppen Y erfolgen. Die erfindungsgemäßen Farbabspalter lassen sich dementsprechend durch die folgende Formel II darstellen.

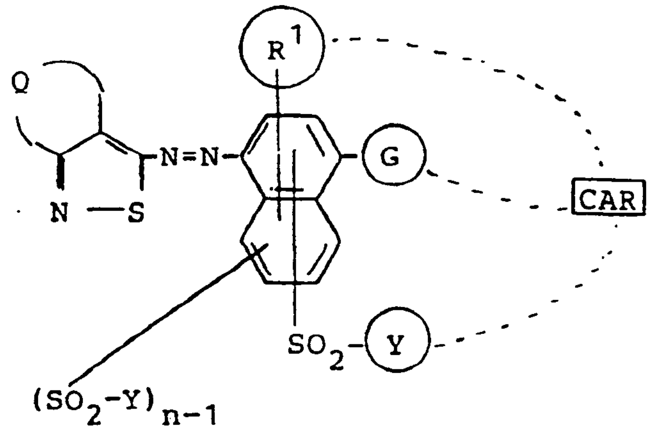

II

worin

Q, G, $R^1$, Y und n die bereits angegebene Bedeutung haben,

CAR einen mindestens eine diffusionsfestmachende Gruppe enthaltenden Trägerrest bedeutet,

und die gestrichelten Linien mögliche Verknüpfungen kennzeichnen. In den erfindungsgemäßen Farbabspalternder Formel II ist somit der Trägerrest als Substituent in einer der durch $R^1$, G oder Y dargestellten Gruppen enthalten.

Der durch CAR dargestellte Trägerrest weist außer der diffusionsfestmachenden Gruppe mindestens eine Gruppierung auf, die als Funktion der Entwicklung einer Silberhalogenidemulsionsschicht spaltbar ist, so daß der an den Trägerrest gebundene Farbstoff gegebenenfalls zusammen mit einem kleinen Bruchstück des ursprünglichen Trägerrestes von der diffusionsfestmachenden Gruppe abgetrennt und somit aus der Verankerung in der Schicht gelöst werden kann. Je nach der Funktionsweise der spaltbaren Gruppierung können die Trägerreste unterschiedliche Strukturen aufweisen.

Bei den erfindungsgemäßen Farbabspaltern kann es sich beispielsweise um nichtdiffundierende Farbkuppler handeln, die in der Kupplungsstelle einen Farbstoffrest gemäß der vorliegenden Erfindung tragen und diesen als Folge einer chromogenen Kupplung in Freiheit setzen. Derartige Abspaltmechanismen sind beispielsweise in DE-C- 1 095 115 und in US-A- 3 227 550 beschrieben.

Als besonders vorteilhaft erweisen sich jedoch redoxaktive Farbabspalter der Formel

BALLAST - REDOX - FARBSTOFF,

worin bedeuten

BALLAST einen Ballastrest

REDOX eine redoxaktive Gruppe, d.h. eine Gruppe, die unter den Bedingungen der alkalischen Entwicklung oxidierbar oder reduzierbar ist und jenachdem, ob sie im oxidierten oder im reduzierten Zustand vorliegt, in unterschiedlichem Ausmaß einer Eliminierungsreaktion, einer nukleophilen Verdrängungsreaktion, einer Hydrolyse oder einer sonstigen Spaltungsreaktion unterliegt mit der Folge, daß der Rest FARBSTOFF abgespalten wird

FARBSTOFF den Rest eines diffusionsfähigen Farbstoffes, im vorliegenden Fall eines Farbstoffes gemäß Formel I.

Als Ballastreste sind solche Reste anzusehen, die es ermöglichen, die erfindungsgemäßen Farbabspalter in den üblicherweise bei fotografischen Materialien verwendeten hydrophilen Kolloiden diffusionsfest einzulagern. Hierzu sind vorzugsweise organische Reste geeignet, die im allgemeinen geradkettige oder verzweigte aliphatische Gruppen mit im allgemeinen 8 bis 20 C-Atomen und gegebenenfalls auch carbocyclische oder heterocyclische gegebenenfalls aromatische Gruppen enthalten. Mit dem übrigen Molekülteil sind diese Reste entweder direkt oder indirekt, z.B. über eine der folgenden Gruppen verbunden: -NHCO-, $-NHSO_2-$, -NR-, wobei R Wasserstoff oder Alkyl bedeutet, -0- oder -S-. Zusätzlich kann der Ballastrest auch wasserlöslichmachende Gruppen enthalten, wie z.B. Sulfogruppen oder Carboxylgruppen, die auch in anionischer Form vorliegen können. Da die Diffusionseigenschaften von der Molekülgröße der verwendeten Gesamtverbindung abhängen, genügt es in bestimmten Fällen, z.B. wenn das verwendete Gesamtmolekül groß genug ist, als Ballastreste auch kürzerkettige Reste verwenden.

Redoxaktive Trägerreste der Struktur BALLAST-REDOXund entsprechende Farbabspalter sind in den verschiedensten Ausführungsformen bekannt.

Oxidierbare Farbabspalter, die nach Oxidation einer Hydrolyse unterliegen unter Freisetzung eines diffusionsfähigen Farbstoffes, sind beispielsweise beschrieben in: DE-A- 2 242 762, DE-A- 24 06 664, DE-A- 25 05 246, DE-A- 26 13 005, DE-A- 26 45 656 und folgenden Research Disclosure publikationen: Nr. 15 157 (November 1976), Nr. 16 654 (April 1977), Nr. 17 736 (Januar 1979). Hierbei handelt es sich überwiegend um Verbindungen, in denen ein Farbstoffrest über eine Sulfonamidgruppe an einen oxidierbaren Trägerrest

gebunden ist; der bei der Entwicklung freigesetzte Farbstoffe weist dementsprechend eine Sulfamoylgruppe auf.

Oxidierbare Farbabspalter, die in oxidierter Form einer intramolekularen Verdrängungsreaktion unterliegen unter Freisetzung eines diffusionsfähigen Farbstoffes, sind beispielsweise Gegenstand von US-A- 3 443 940. Aus diesen Farbabspaltern werden Farbstoffe mit Sulfinatgruppen freigesetzt.

Beispiele für oxidierbare Trägerreste, von denen in oxidierter Form ein daran gebundener Farbstoffrest abgespalten wird, sind im folgenden aufgeführt:

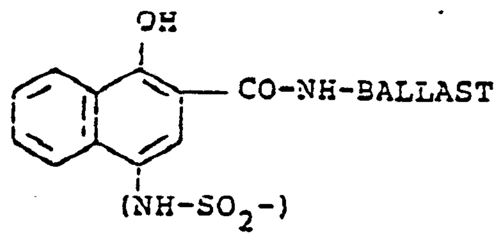

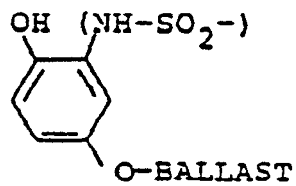

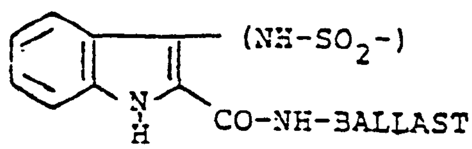

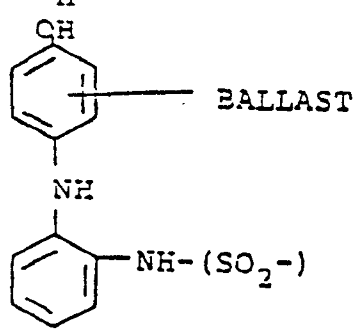

Die in Klammern eingeschlossenen Gruppen werden zusammen mit dem Farbstoffrest abgespalten; sie verbleiben als funktionelle Gruppen beim Farbstoff, an den sie gegebenenfalls über ein Zwischenglied gebunden sind.

Bei den bisher genannten Farbabspaltertypen werden die Farbstoffreste proportional zur Bildungsrate eines Oxidationsproduktes durch Entwicklung von Silberhalogenid oder durch katalytische Verstärkung z.B. mit $H_2O_2$, abgespalten. Dieses Prinzip arbeitet daher als Negativverfahren und bedarf zur Herstellung positiver Bilder einer Umkehrung, z.B. durch Verwendung direkt positiver Emulsionen oder durch eine nach dem Prinzip der Silbersalzdiffusion arbeitende Schichtanordnung.

Es ist besonders vorteilhaft, wenn der einen Ballastrest und einen Redoxteil aufweisende Trägerrest so aufgebaut ist, daß der diffusionsfähige Azofarbstoff annähernd umgekehrt proportional zum Entwicklungszustand der Silberhalogenidschicht unter alkalischen Bedingungen freigesetzt wird. In diesem Fall handelt es sich um ein von vornherein positiv arbeitendes System, das zur Herstellung positiver Bilder unter Verwendung herkömmlicher negativer Silberhalogenidemulsionen geeignet ist. Derartige Farbabspalter sind ebenfalls bekannt und werden im folgenden beschrieben.

Oxidierbare Farbabspalter, die in oxidierter Form stabil sind, jedoch in reduzierter Form einer intramolekularen nukleophilen Verdrängungsreaktion unterliegen unter Abspaltung eines Farbstoffrestes, sind beispielsweise Gegenstand von DE-A-24 02 900 und DE-A-25 43 902.

Oxidierbare Farbabspalter, die in oxidierter Form stabil sind, jedoch in reduzierter Form den Farbstoff in

einer Eliminierungsreaktion freisetzen, sind beschrieben in DE-A-28 23 159 und DE-A-28 54 946.

Die Wirkungsweise der beiden zuletzt genannten Gruppen von Farbabspaltern läßt sich umkehren, wenn derartige Verbindungen nicht in reduzierter Form, sondern in oxidierter Form eingesetzt werden. Auf diese Weise kommt man zu den im folgenden erwähnten Farbabspaltertypen.

Reduzierbare Farbabspalter, die nach Reduktion einer intramolekularen nukleophilen Verdrängungsreaktion unter Freisetzung eines Farbstoffrestes unterliegen, sind Gegenstand von DE-A-28 09 716. Diese Verbindungen werden als sogenannte BEND-Verbindungen bezeichnet (BEND "Ballasted Electron-accepting Nucleophilic Displacement").

Reduzierbare Farbabspalter, die nach Reduktion einer Eliminierungsreaktion unterliegen unter Freisetzung eines Farbstoffes, sind Gegenstände von EP-A-0 004 399 und GB-A-8 012 242.

Weitere Klassen von reduzierbaren Farbabspaltern, die nach ähnlichen Reaktionsweisen reduktiv spaltbar sind unter Freisetzung von Farbstoffen, sind Gegenstände von DE-A- 30 08 588 und DE-A- 30 14 669.

Beispiele für reduzierbare Trägerreste, von denen ein daran gebundener Farbstoffrest reduktiv abgespalten wird, sind im folgenden aufgeführt.

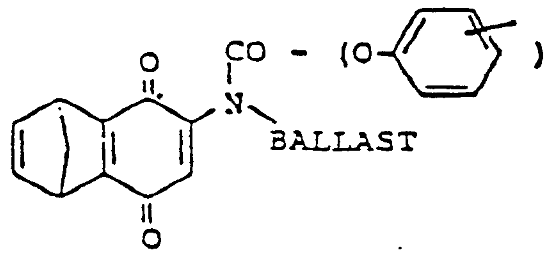

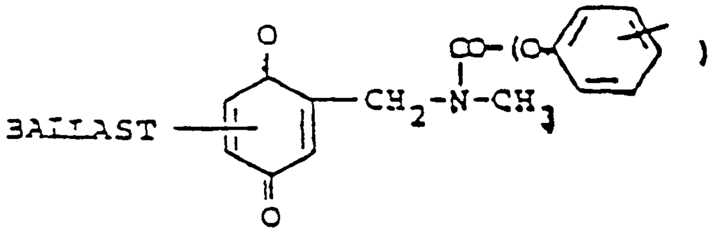

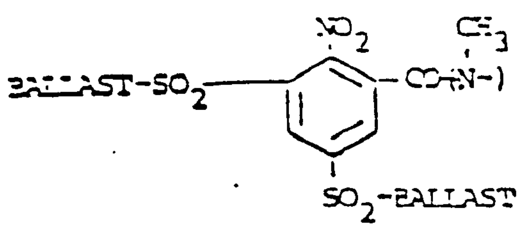

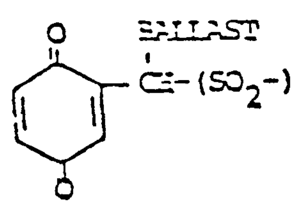

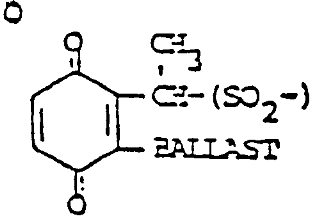

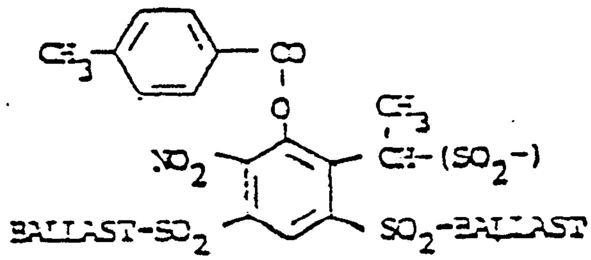

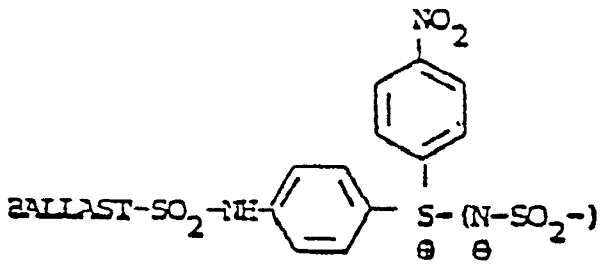

Die in Klammern eingeschlossenen Gruppen, sind funktionelle Gruppen des Farbstoffrestes und werden zusammen mit diesem vom zurückbleibenden Teil des Trägerrestes abgetrennt. Bei der funktionellen Gruppe kann es sich um einen der Substituenten handeln, die bei der Erläuterung der Bedeutung der Reste $R^1$, G und Y in der Formel I erwähnt worden sind und die einen unmittelbaren Einfluß auf die Absorptionseigenschaften der erfindungsgemäßen Farbstoffe der Formel 1 ausüben können. Die funktionelle Gruppe kann andererseits aber auch von dem Chromophor des erfindungsgemäßen Farbstoffes durch ein Zwischenglied getrennt sein, indem sie sich als Substituent in einer der für $R^1$, G und Y definierten Gruppen befindet, ohne daß hierdurch ein Einfluß auf die Absorptionseigenschaften wirksam werden müßte. Die funktionelle Gruppe kann jedoch gegebenenfalls zusammen mit dem Zwischenglied von Bedeutung sein für das Diffusions- und Beizverhalten der erfindungsgemäßen Farbstoffe. Geeignete Zwischenglieder sind beispielsweise Alkylen- oder Arylengruppen.

Die zuletzt erwähnten Klassen von reduzierbaren, reduktiv spaltbaren Farbabspaltern werden zweckmäßigerweise zusammen mit sogenannten Elektronendonorverbindungen (ED-Verbindungen) verwendet. Letztere wirken als Reduktionsmittel, das bei der Entwicklung des Silberhalogenids bildmäßig verbraucht wird und mit seinem nicht verbrauchten Anteil seinerseits den zugeordneten Farbabspalter reduziert und dadurch die Abspaltung des Farbstoffes bewirkt. Geeignete ED-Verbindungen sind beispielsweise nicht oder nur wenig diffundierende Derivate des Hydrochinons, des Benzisoxazolons, des p-Aminophenols oder der Ascorbinsäure (z.B. Ascorbylpalmitat), die beispielsweise in DE-A- 28 09 716 beschrieben sind. Besonders günstige ED-Verbindungen sind Gegenstand von DE-A-30 06 268.

Beispiele geeigneter ED-Verbindungen sind im folgenden aufgeführt.

ED 1

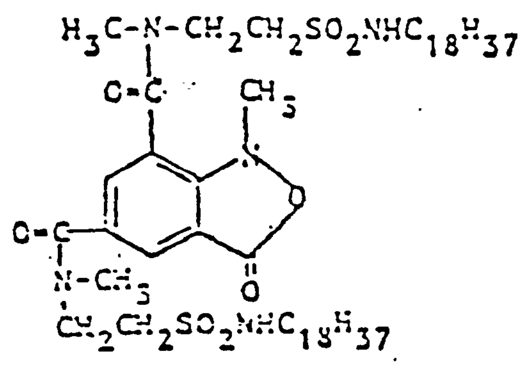

ED 2

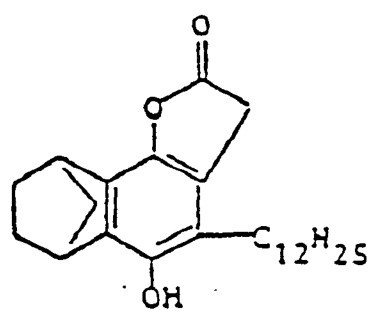

ED 3

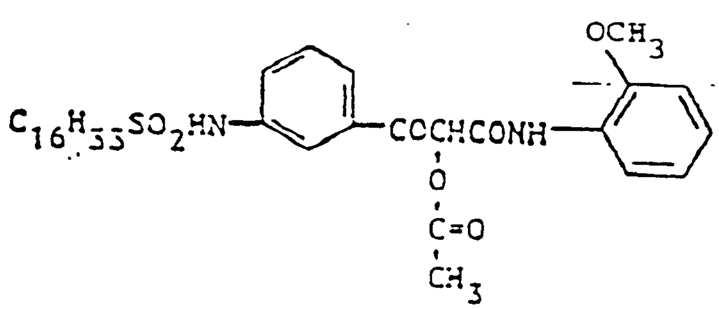

ED 4

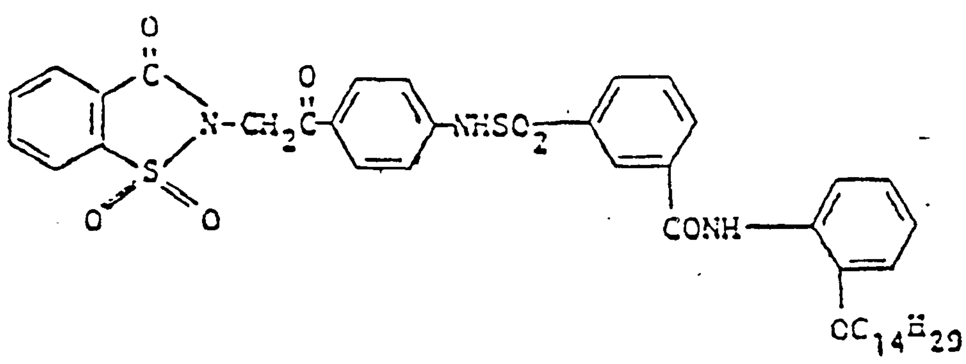

ED 5

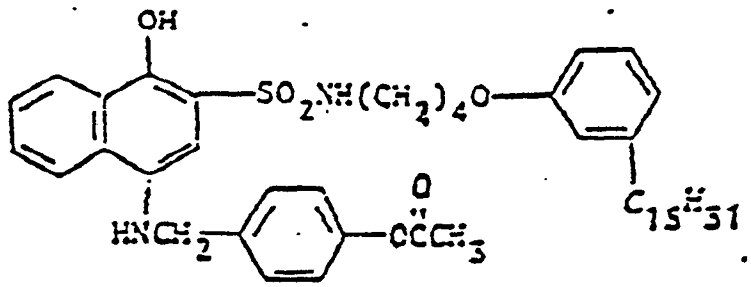

ED 6

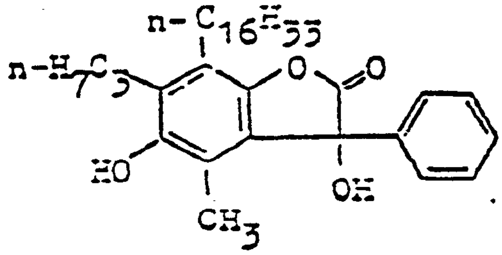

ED 7

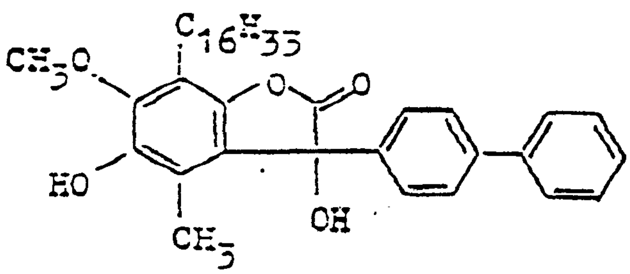

Beispiele für erfindungsgemäße blaugrüne Monoazofarbstoffe der Formel I mit besonders günstiger Absorption sind im folgenden aufgeführt.

Bei den durch ein Sternchen (*) gekennzeichneten Farbstoffen handelt es sich um Modellfarbstoffe, die in präparativ einfacher Weise in erfindungsgemäße Farbabspalter der Formel II oder daraus freigesetzte Farbstoffe der Formel I überführt werden können.

Farbstoff 1 *

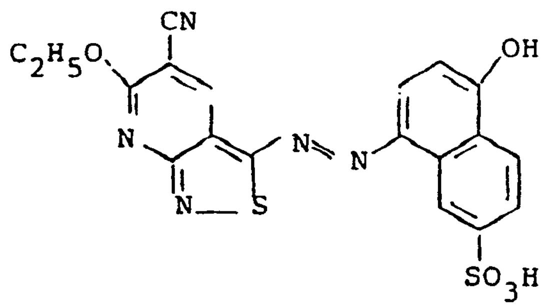

Farbstoff 2 *

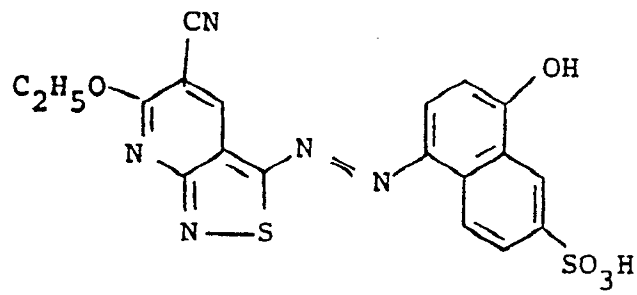

Farbstoff 3 *

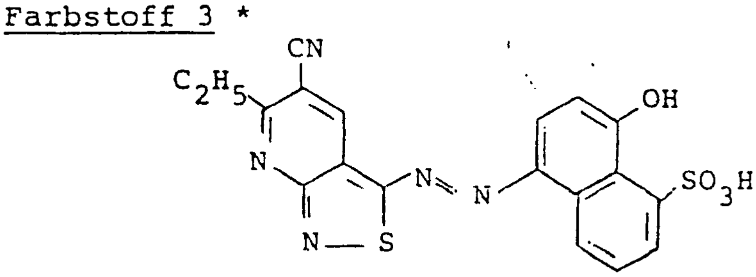

Farbstoff 4 *

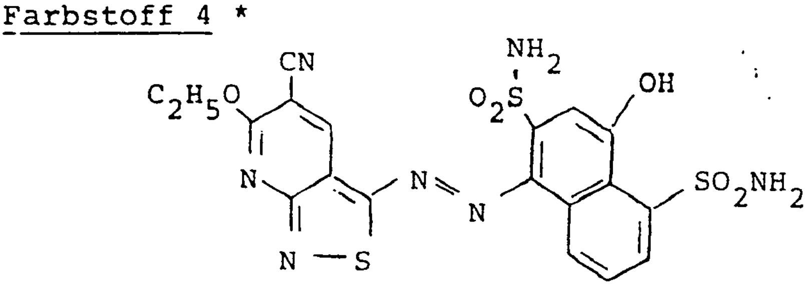

Farbstoff 5

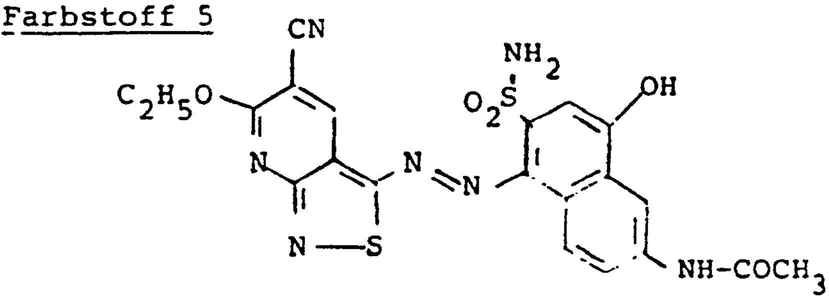

Farbstoff 6

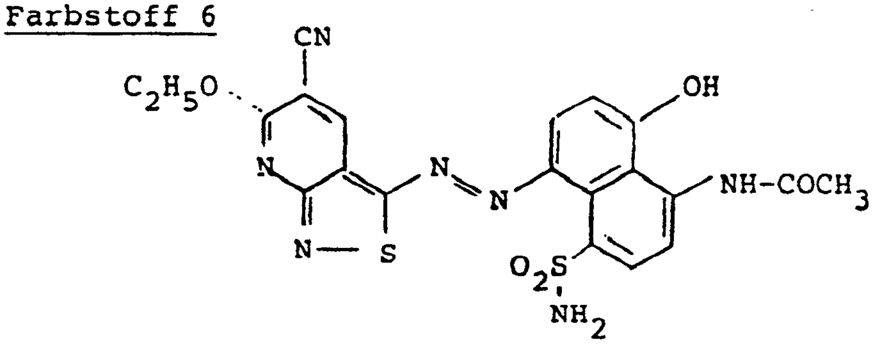

Farbstoff 7

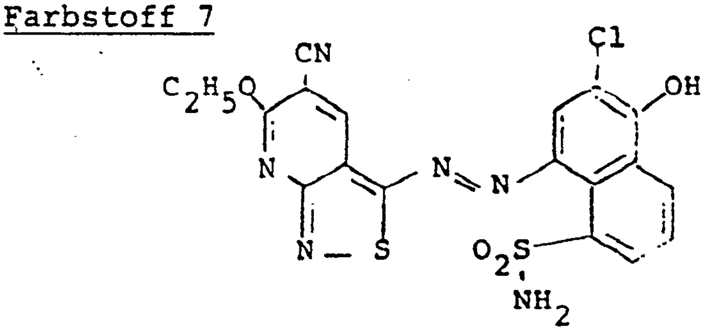

Farbstoff 8

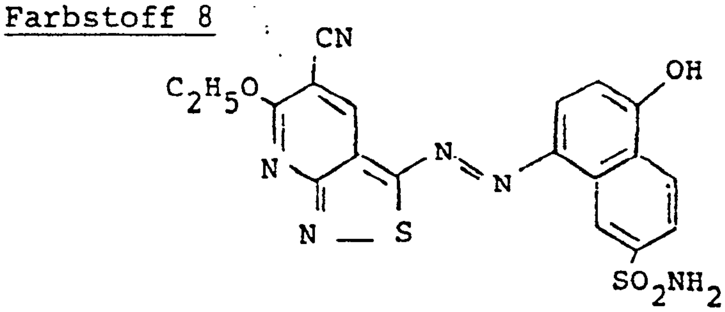

Farbstoff 9

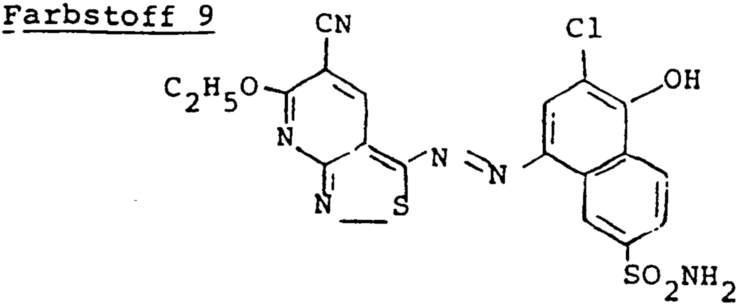

Farbstoff 10

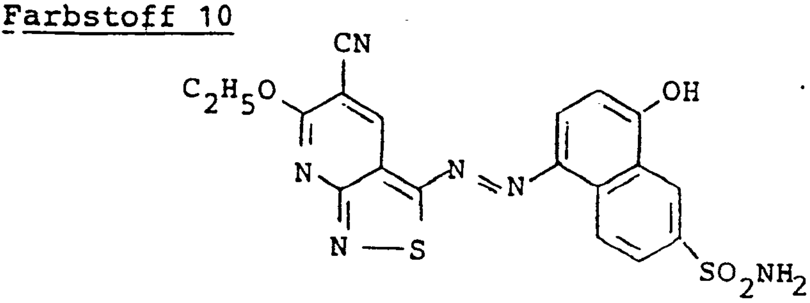

Farbstoff 11

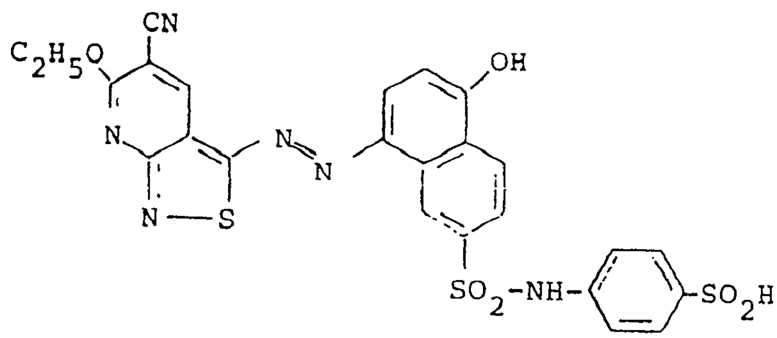

Farbstoff 12

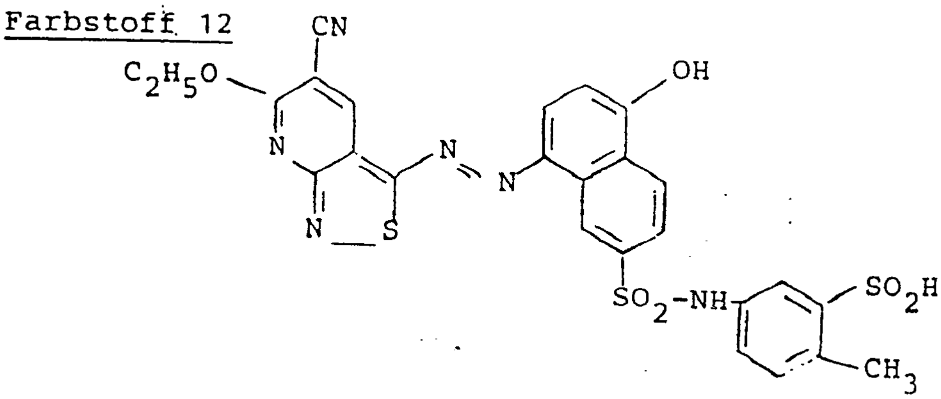

Farbstoff 13

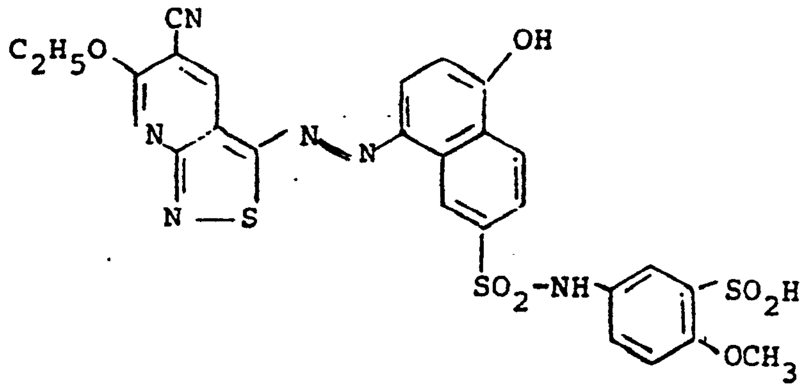

Farbstoff 14

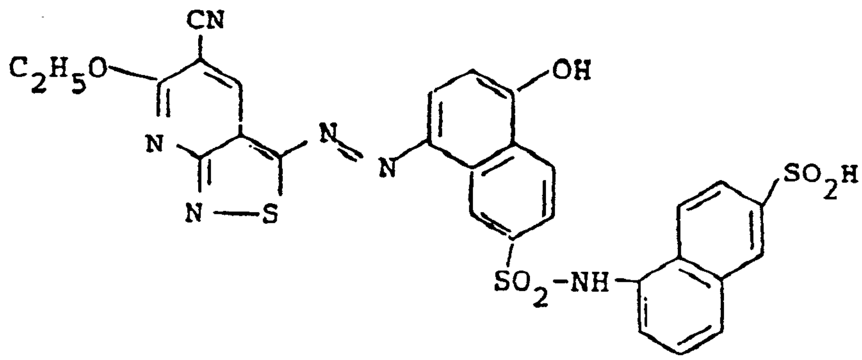

Farbstoff 15

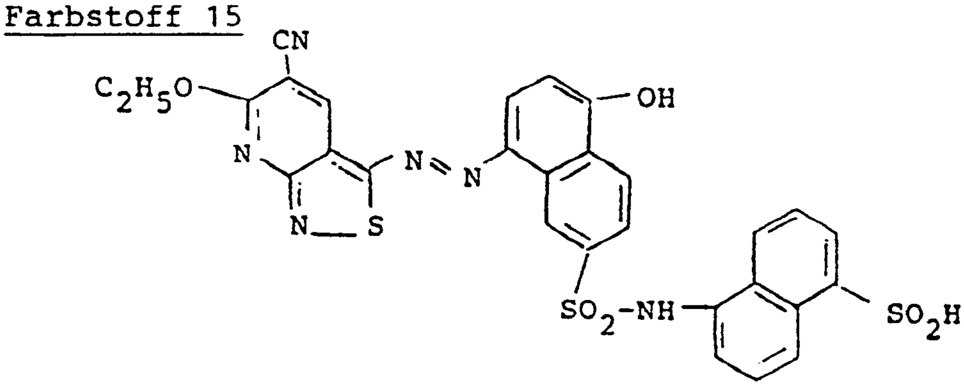

Farbstoff 16

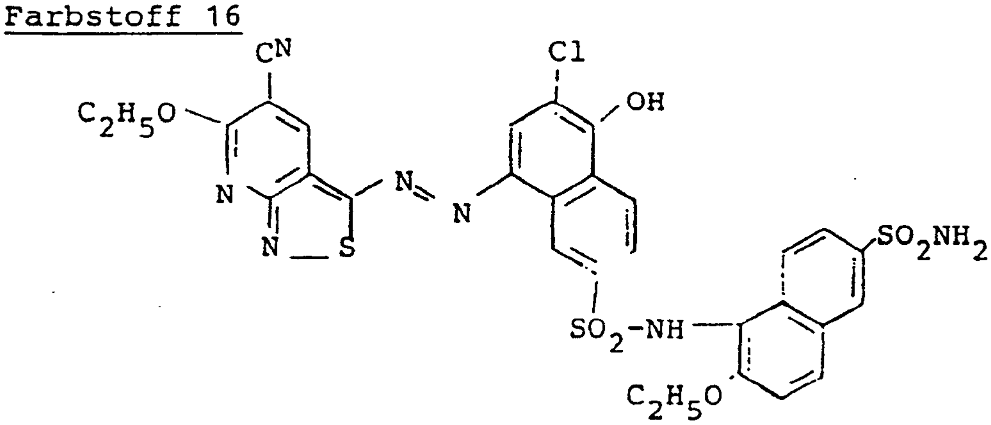

Farbstoff 17

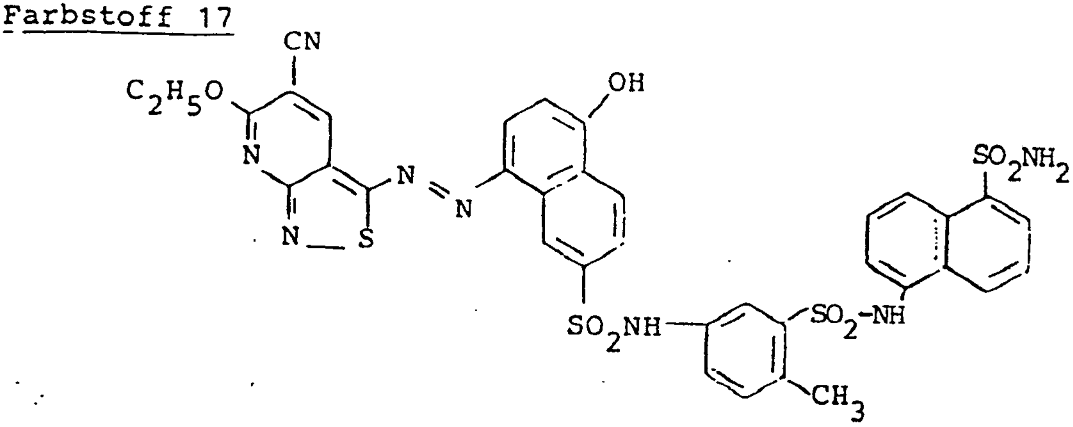

Farbstoff 18

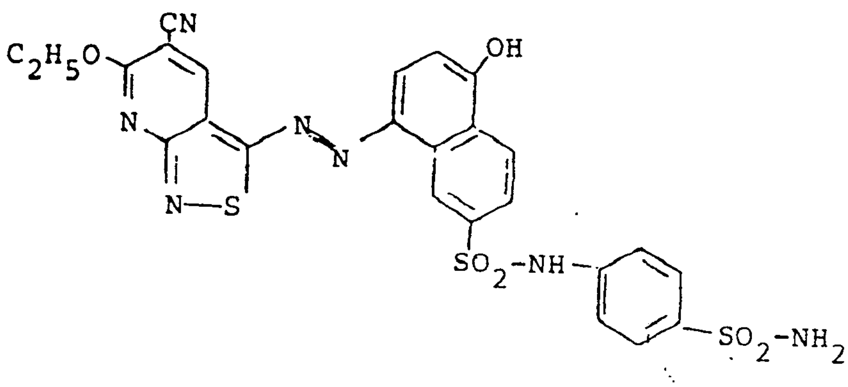

Farbstoff 19

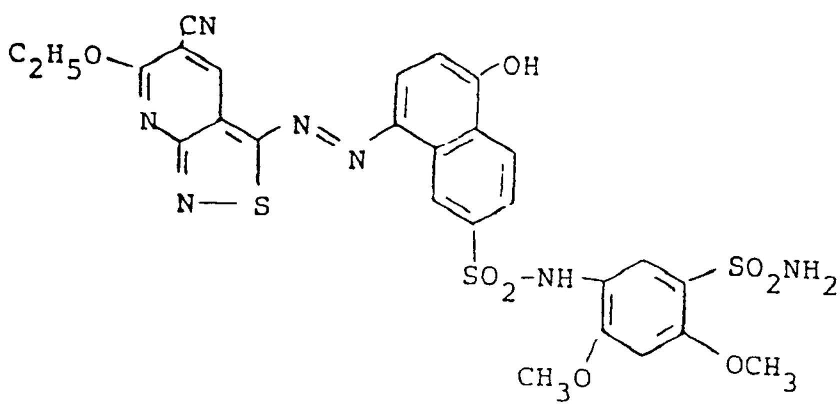

Farbstoff 20

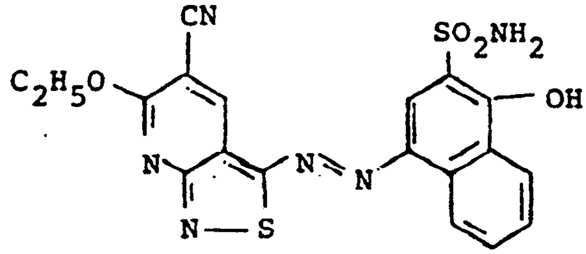

Farbstoff 21*

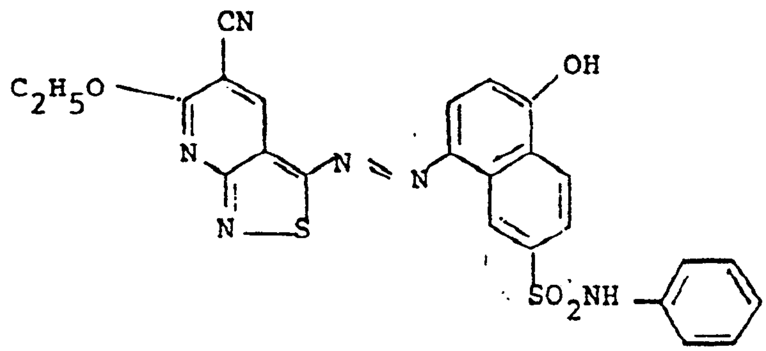

Farbstoff 22

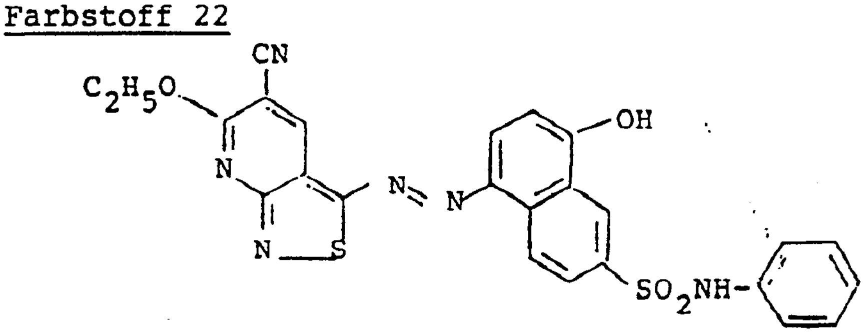

Farbstoff 23*

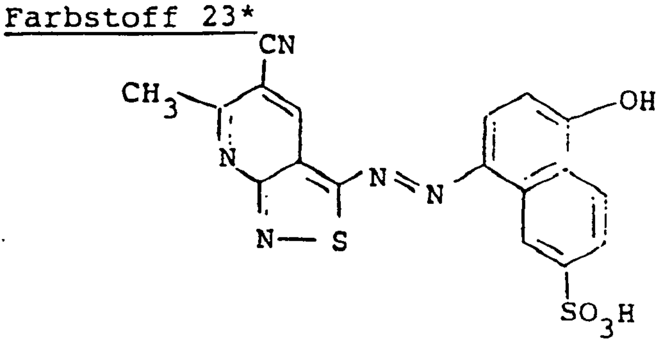

Farbstoff 24

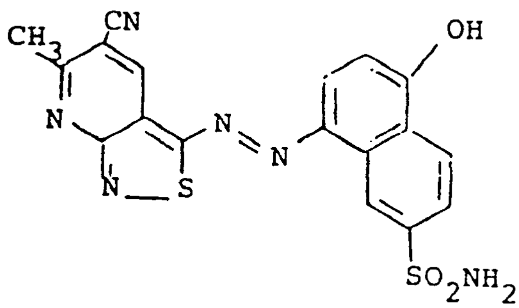

Farbstoff 25

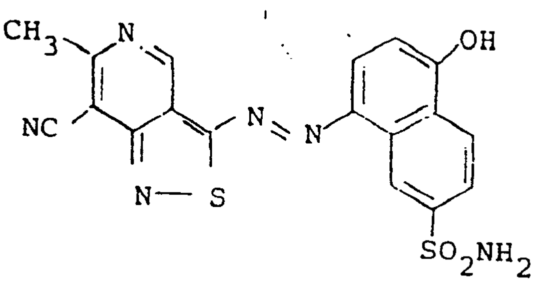

Farbstoff 26

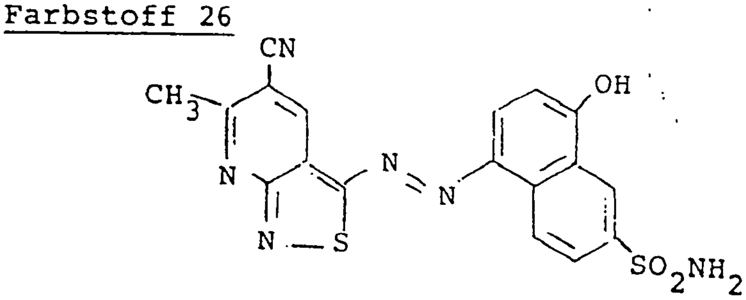

Farbstoff 27*

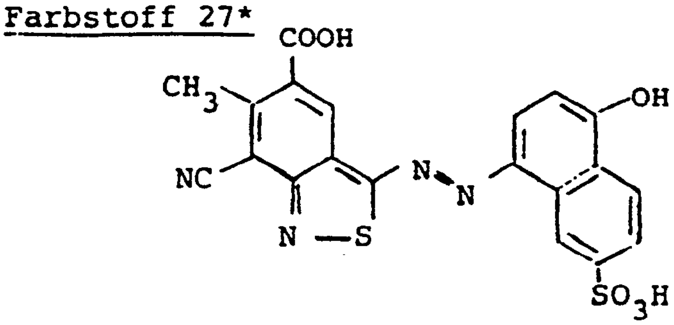

Farbstoff 28*

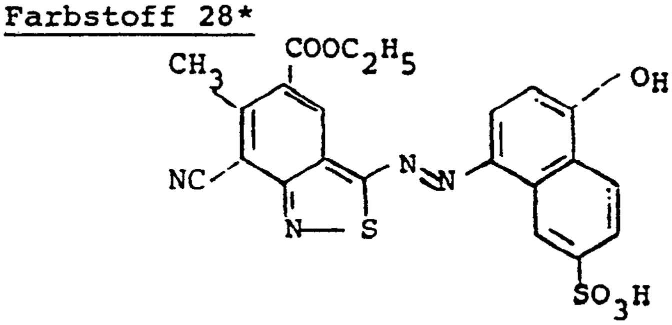

Farbstoff 29*

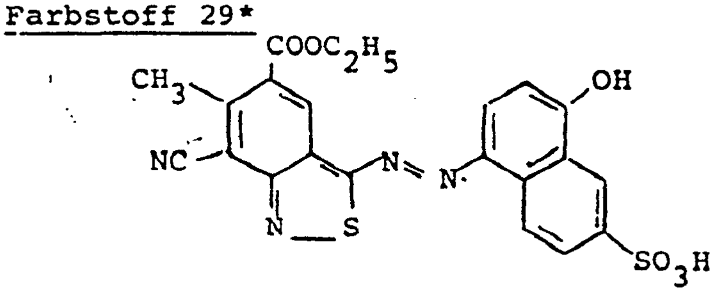

Farbstoff 30*

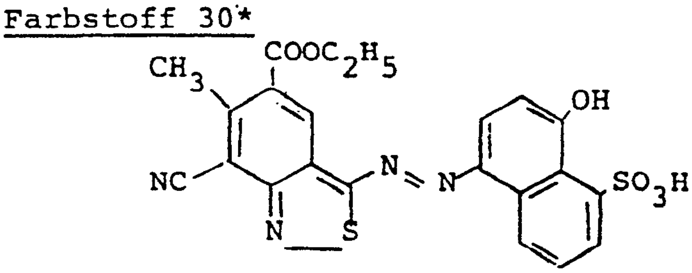

Farbstoff 31*

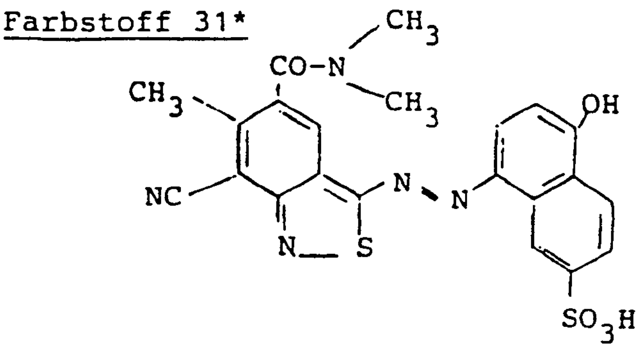

Farbstoff 32*

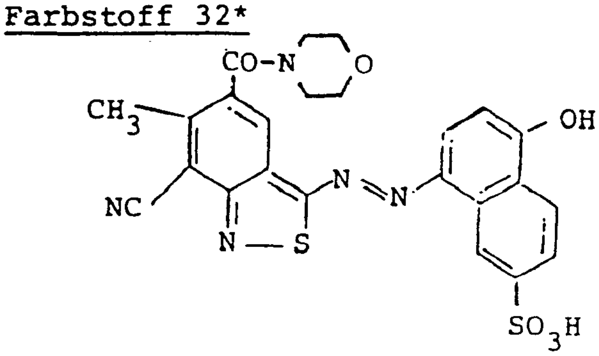

Farbstoff 33

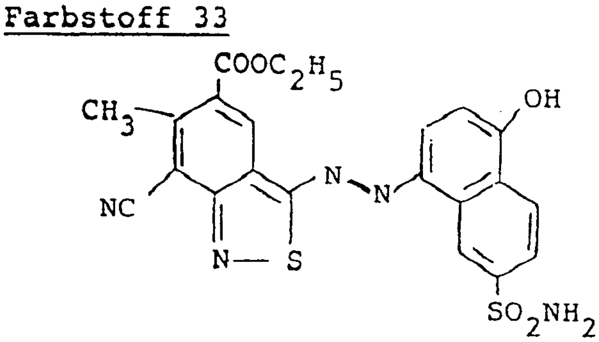

Farbstoff 34*

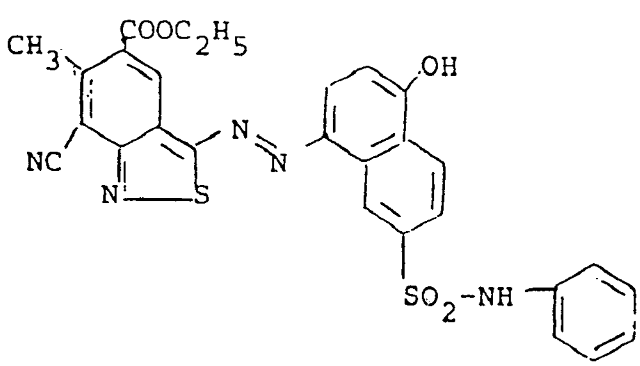

Farbstoff 35

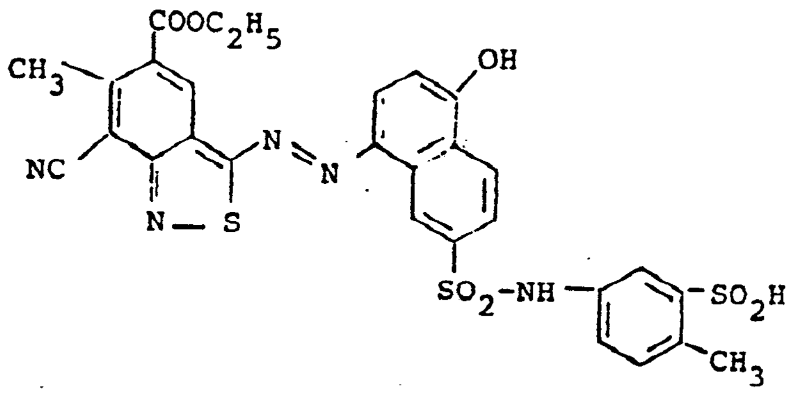

Farbstoff 36

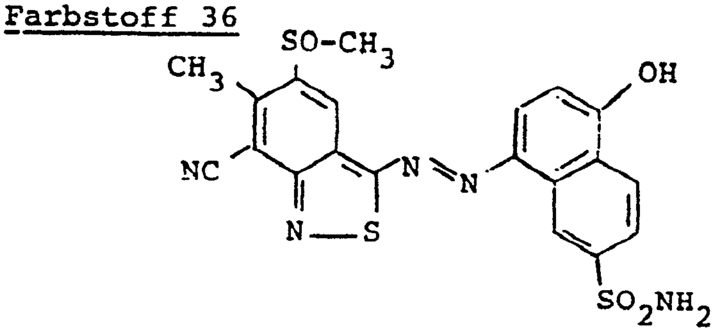

Farbstoff 37

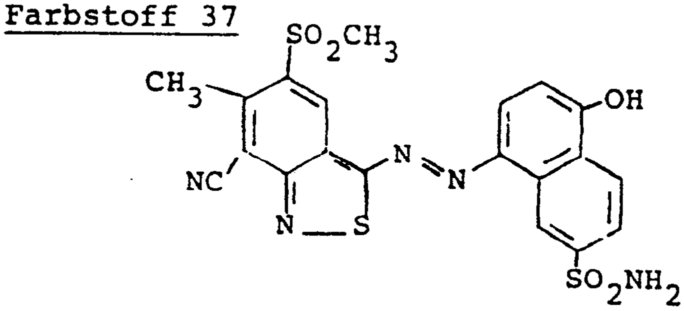

Farbstoff 38

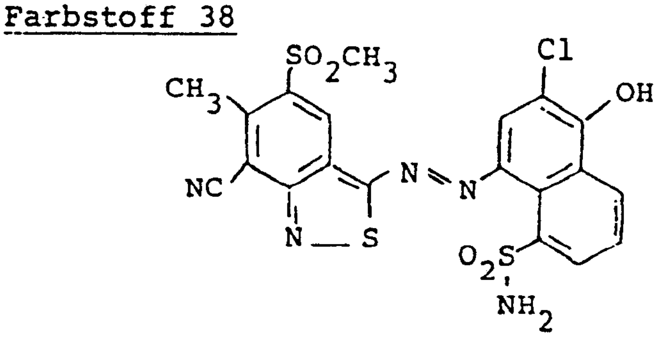

Farbstoff 39

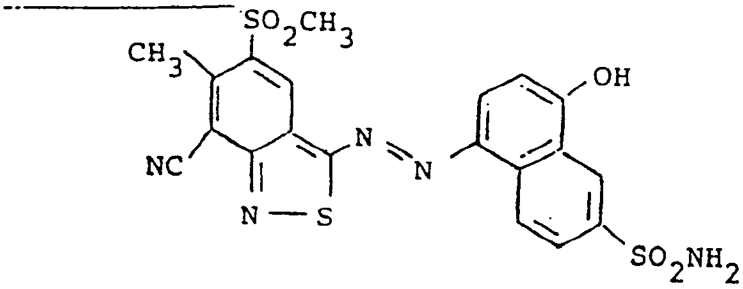

Farbstoff 40

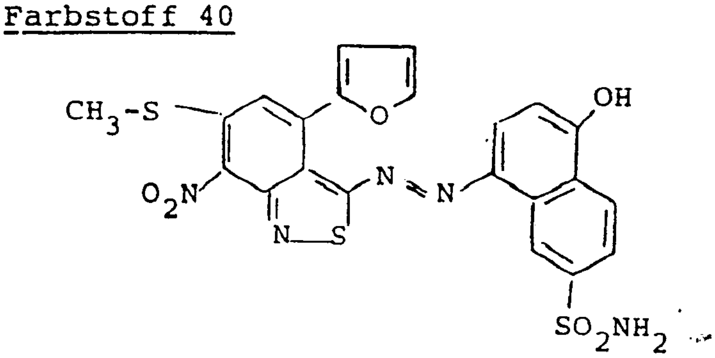

Farbstoff 41

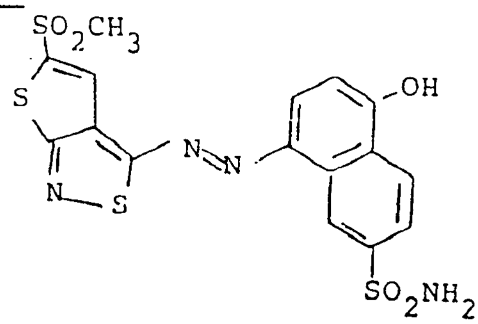

Farbstoff 42

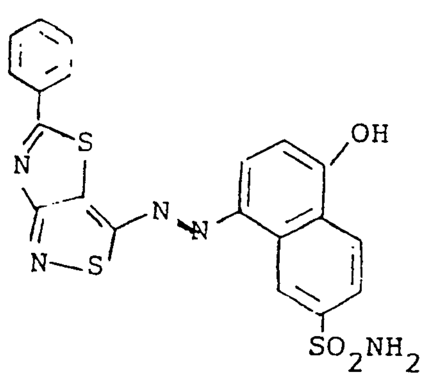

Farbstoff 43

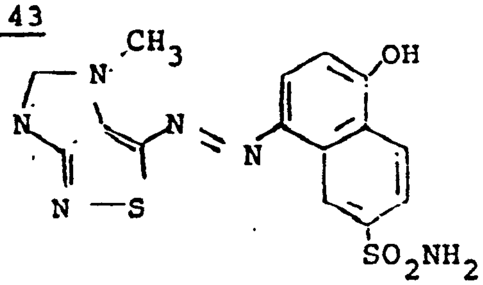

Farbstoff 44

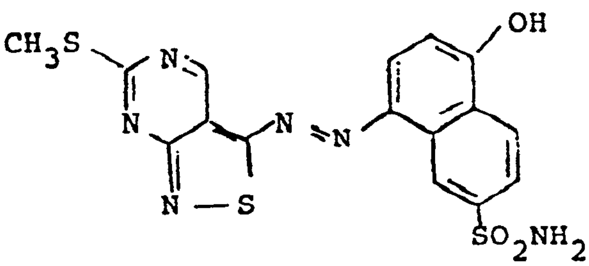

Farbstoff 45*

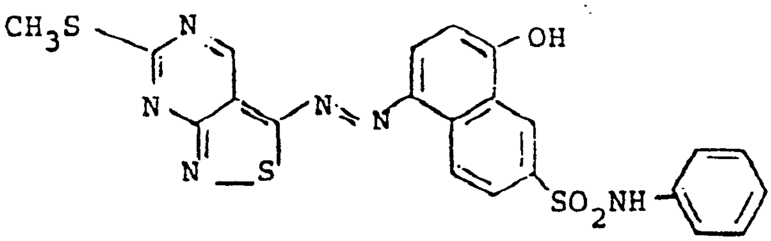

Farbstoff 46

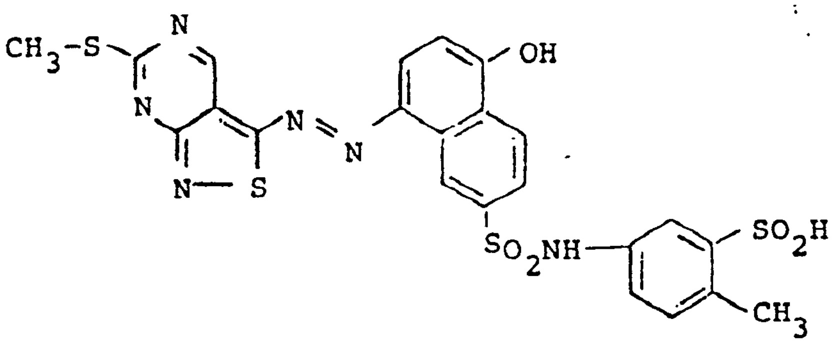

Farbstoff 47

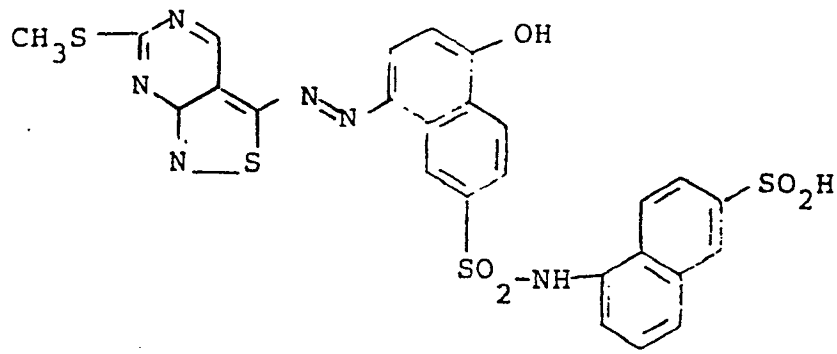

Farbstoff 48

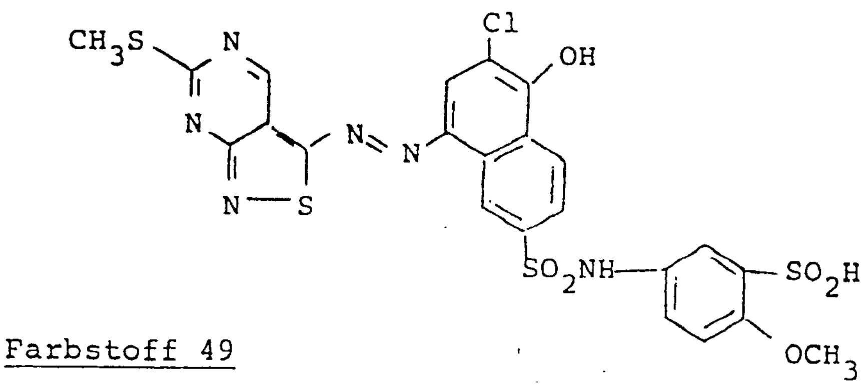

Farbstoff 49

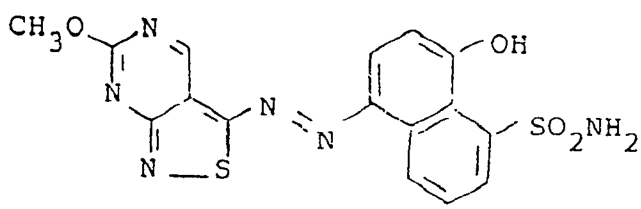

Farbstoff 50

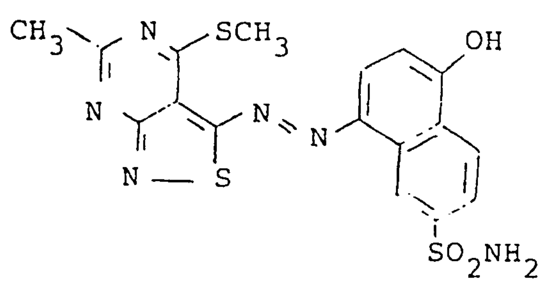

Farbstoff 51

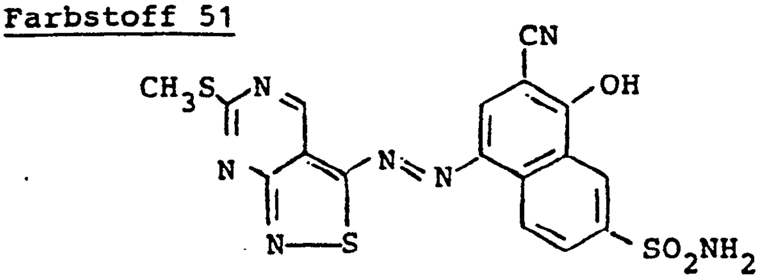

Farbstoff 52*

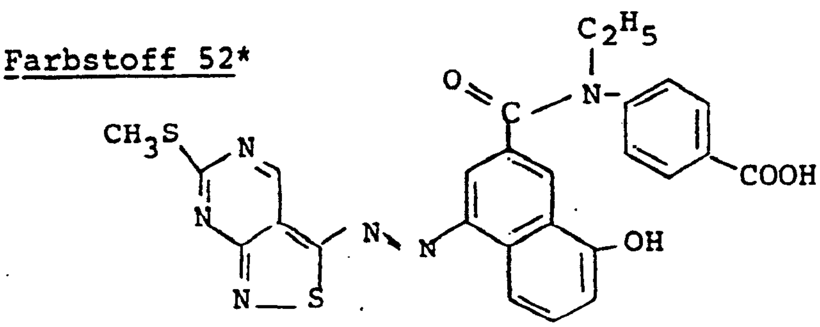

Farbstoff 53

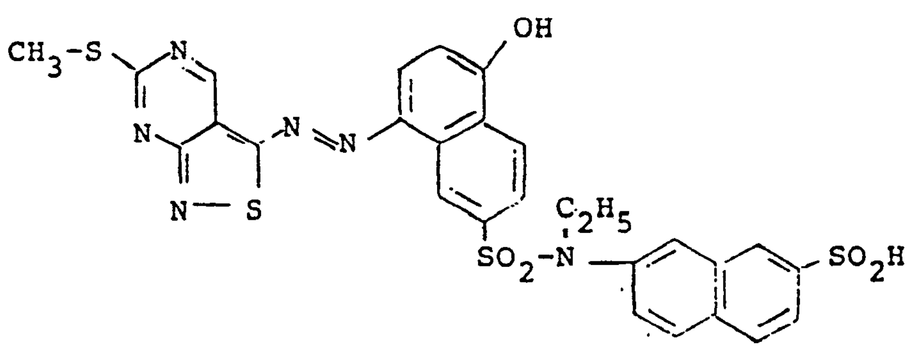

Farbstoff 54

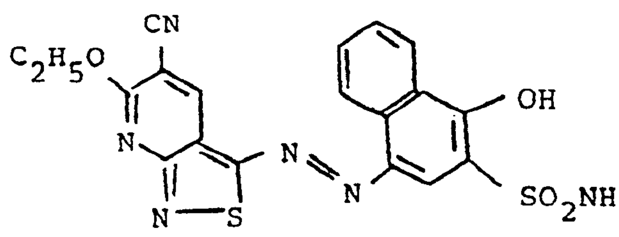

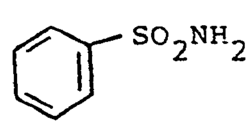

Die erfindungsgemäß verwendeten Monoazofarbstoffe der Formel 1 sind im wesentlichen neu. Dies ist nicht überraschend, weil sie für bekannte färberische Zwecke aufgrund ihres pH-Verhaltens wenig geeignet erscheinen. Sie liegen nämlich bei pH-Werten unterhalb 4-5 in der neutralen Form vor, deren Nuance rotviolett bis blau ist und erst bei pH-Erhöhung nach blaugrün umschlägt. Für die Anwendung in fotographischen Aufzeichnungsmaterialien auf Basis des Farbdiffusionsverfahren ist jedoch gerade dieses Verhalten erwünscht, denn es führt dazu, daß der Farbstoff in der Einlagerungsform keine starke Absorption im Bereich der sensibilisierten Empfindlichkeit einer zugeordneten Emulsionsschicht und somit nur geringe unerwünschte Filterwirkung aufweist.

Die Herstellung der erfindungsgemäßen Monoazofarbstoffe der Formel 1 bzw. der Farbabspalter der Formel II erfolgt üblicherweise durch eine Mehrzahl von Schritten, von denen einer die Verknüpfung mit dem diffusionsfest machenden Trägerrest, ein anderer den Aufbau des Chromophors betrifft. Dieser letztere erfolgt üblicherweise durch Azokupplung des Diazoniumsalzes aus einem kondensierten Aminoisothiazol der Formel III mit einem Naphthol der Formel IV.

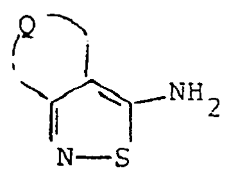

III

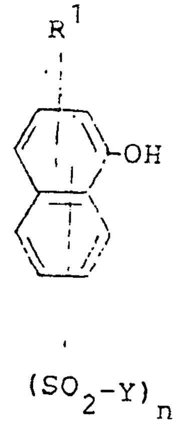

IV

In den Formeln III und IV haben Q , $R^1$, Y und n die bereits früher angegebene Bedeutung. Gegebenenfalls kann Y in funktionell abgewandelter Form vorliegen, d.h. in einer Form, aus der durch bekannte präparative Verfahren der Rest Y in der endgültigen Form hergestellt werden kann.

Das Verfahren ist allgemein bekannt und beschrieben und bedarf für den Fachmann keiner weiteren Erläuterung. Geeignete Vorschriften für die Diazotierung von Verbindungen der Formel III und die Azokupplung finden sich beispielsweise in folgenden deutschen patentpublikationen:

DE-A- 23 54 686
DE-A- 23 36 978
DE-A- 27 01 289
DE-A- 21 15 626
DE-A- 27 16 033 (naphtholische Azokuppler)

Eine Übersicht findet sich in dem Artikel von Weaver und Shuttleworth "Heterocyclic Diazo Components" in Dyes and Pigments 3 [1982] Seiten 81-121.

Der genannte Artikel enthält auch Angaben zur Synthese der Diazokomponenten durch Oxidation eines ortho-Aminothiocarbonamids, welches seinerseits durch $H_2S$-Anlagerung an ein ortho-Aminonitril zugänglich ist. Die Methode geht auf Goerdeler zurück [Chem. Ber. 94, 2950 (1961)] und stellt das heute am allgemeinsten einsetzbare Verfahren zur Synthese kondensierter Aminoisothiazole (III) dar. Außerdem finden sich brauchbare Angaben zur präparativen Zugänglichkeit von Verbindungen der Formel III in einem Artikel von Wippel in Melliand Textilber. 50, 1090-1096 (1969), sowie in zwei Artikeln von Niess und Eilingsfeld, Liebigs Ann. Chem. 1974, 2019-2029 und Seybold und Eilingsfeld, ebenfalls Liebigs Ann. Chem. 1979, 1271-1279.

Die zur oxidativen Cyclisierung erforderliche 2-Amino-thiocarbonamidstruktur kann selbstverständlich auch über den entsprechenden 2-Aminocarbonester und das 2-Aminocarbonamid durch Schwefelung, z.B. mit $P_4S_{10}$, erhalten werden.

Eine beispielhafte Übersicht geeigneter Aminoisothiazole ("Amin") der Formel III findet sich im folgenden:

Amin 1

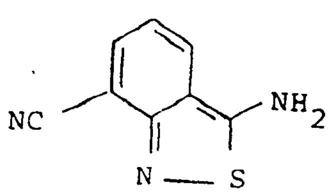

Amin 2

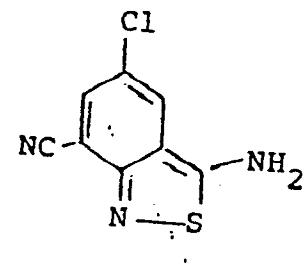

Amin 3

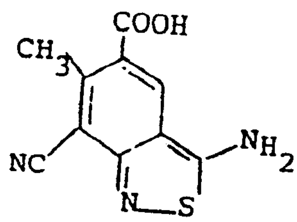

Amin 4

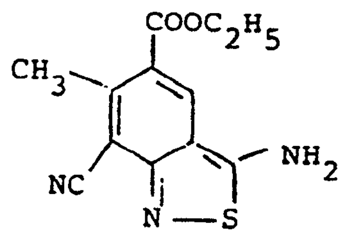

Amin 5

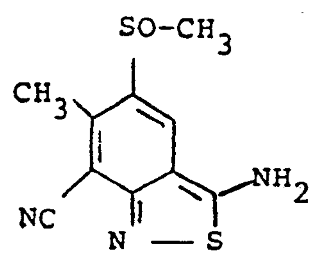

Amin 6

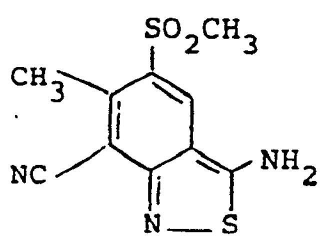

Amin 7

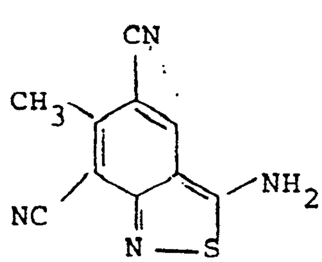

Amin 8

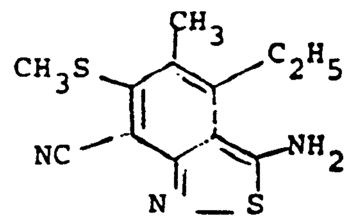

(Anmerkung zu Amin 8: Synthese und analytische Methoden geben keinen sicheren Aufschluß darüber, ob diese Verbindung in der angegebenen Struktur vorliegt oder in isomerer Form mit vertauschten Substituenten $-SCH_3$ und $-C_2H_5$)

Amin 9

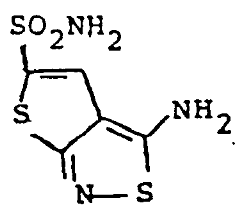

Amin 10

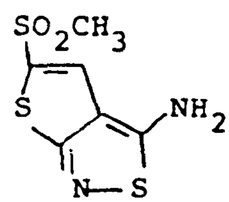

Amin 11

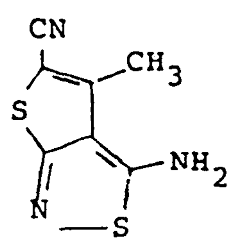

Amin 12

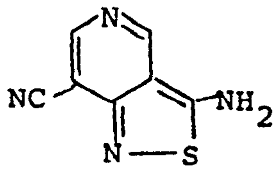

Amin 13

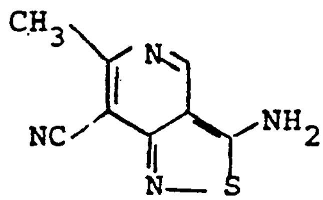

Amin 14

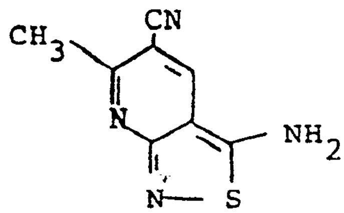

Amin 15

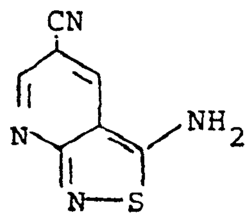

Amin 16

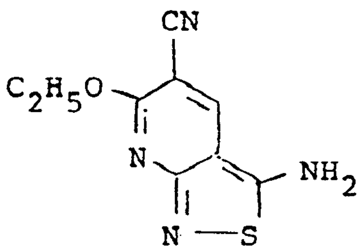

Amin 17

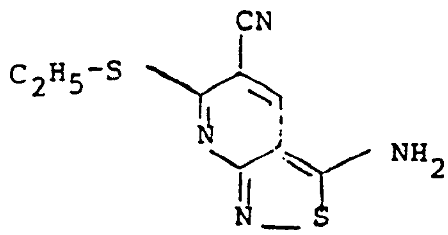

Amin 18

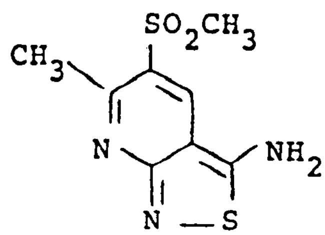

Amin 19

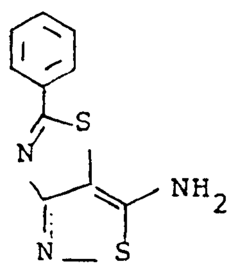

Amin 20

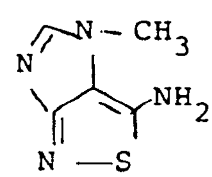

Amin 21

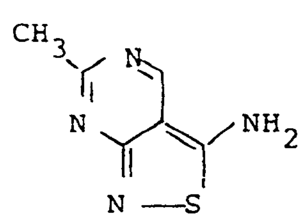

Amin 22

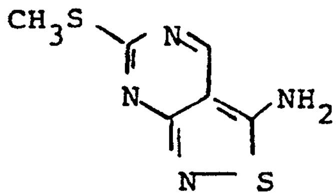

Amin 23

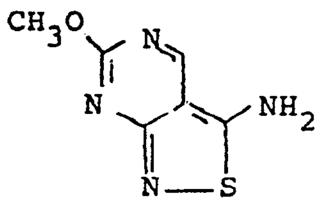

Amin 24

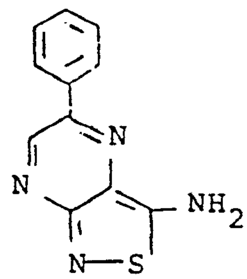

Amin 25

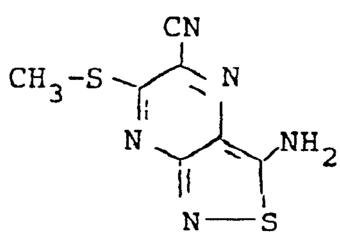

Amin 26

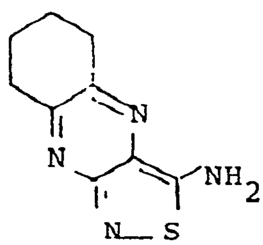

In der angegebenen Auswahl sind Verb. 3-5 repräsentativ für eine Reihe von Aminoisothiazolen mit ankondensiertem Benzolring, die nach dem Verfahren der deutschen Patentanmeldung P 32 20 117.6 gewonnen werden.

Die Amine 9 bis 11 (Aminothienoisothiazole) sind repräsentativ für eine breitere Klasse von Aminoisothiazolen mit ankondensiertem Thiophenring, die aus den entsprechenden Aminocyanthiophenen,

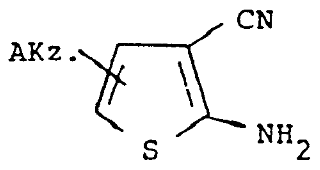

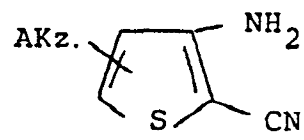

worin Akz. für eine Elektronenakzeptorgruppe, z.B. Cyan, Alkylsulfonyl, Arylsulfonyl, Trifluormethyl, Alkoxycarbonyl, Arylaminocarbonyl, Aralkylaminocarbonyl, Dialkylaminocarbonyl, Sulfamoyl steht, durch $H_2S$-Anlagerung und nachfolgende Oxidation gewonnen werden.

Die Amine 12 bis 18 (Aminopyridoisothiazole) sind repräsentativ für eine Klasse von Aminoisothiazolen mit ankondensiertem Pyridinring, die aus den entsprechenden Aminocyanpyrimidinen

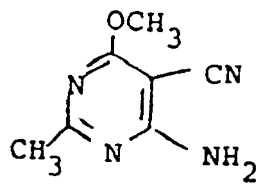

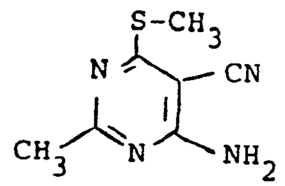

mit zueinander vicinaler Amino- und Cyangruppe, worin R und $R^1$ gegebenenfalls weitere Elektronen-donor- bzw. akzeptorgruppen, z.B. Alkyl-, Aryl-, Alkoxy-, Aryloxy-, Alkylthio-, Arylthio-, Acylamino-, Alkoxycarbonyl-, Sulfamoyl-, Carbamoyl-, Sulfon- oder Cyangruppen bedeuten, durch $H_2S$-Anlagerung und nachfolgende Oxidation erhalten werden.

In diesem Zusammenhang kann auf folgende Literatur verwiesen werden:

Liebscher, Hartmann; J. prakt. Chem. 318 [1979], Seiten 705-730,
Gewald, Schäfer, Bellmann; J. prakt. Chem. 324 [1982] 933-41,
Little, Middleton, Coffman, Engelhardt, Sausen; J. Amer. Chem. Soc. 80, 2832-2838 (1958)
Czerney, Hartmann; J. prakt. Chem. 324, 255-66 (1982),
Sayer, Dyes and Pigments 3 [1982] 121-131 und die dort zitierte Literatur.

Die Amine 21 bis 23 (Aminopyrimidoisothiazole) sind repräsentativ für eine Klasse von Aminoisothiazolen mit ankondensierten Pyrimidinylring, die aus entsprechenden Aminocyanpyrimidinen durch $H_2S$-Anlagerung und nachfolgende Oxidation zugänglich sind. Beispiele hierfür sind

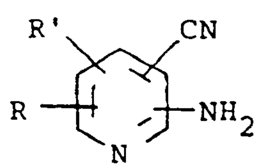

Middleton, Engelhardt J. Amer. Chem. Soc. 80, 2822-2832 (1958).

Amin 19 (Aminothiazoloisothiazole) ist repräsentativ für eine Reihe von Aminoisothiazolen mit ankondensierten Thiazolring, welche aus den entsprechenden 4-Amino-5-cyanthiazolen durch $H_2S$-Anlagerung und nachfolgende Oxidation erhalten werden können. Die als Ausgangsmaterial verwendeten 4-Amino-5-cyanthiazole können in der 2-Stellung mit Alkyl, einem carbocyclischen oder heterocyclischen aromatischen Rest, z.B. Phenyl oder Thienyl, oder mit Alkoxy, Alkylthio, Dialkylamino, Acylamino oder einer cyclischen Aminogruppe substituiert sein.

In diesem Zusammenhang kann auf folgende Literatur verwiesen werden:

K. Gewald, Blauschmidt, Mayer; J. prakt. Chem. [4] 35, S. 97 (1967)
Wobig; Liebigs Ann. Chem. 764 [1972] 125 1976 1166 1978 1118 1979 757
Walek, Pallas, Augustin Tetrahedron 32, 623 [1976]
Hartke, Seib. Arch. Pharm. 303 [1970], 625.

Amin 20 (Aminoimidazoisothiazol) ist repräsentativ für eine Reihe von Aminoisothiazolen mit ankondensierten Imidazolring, welche aus den entsprechenden 4-Amino-5-cyanimidazolen, bzw. 5-Amino-4-cyanimidazolen durch $H_2S$-Anlagerung und nachfolgende Oxidation gewonnen werden.

Auf folgende Literatur ist zu verweisen:.
Dissertation F. Saygin, München 1968 Gewald, Heinhold Monatsh. 107, 1413 ff.

Die Amine 24 bis 26 (Aminopyrazinoisothiazole) sind repräsentativ für eine Reihe von Aminoisothiazolen mit ankondensiertem Pyrazinring, die über die entsprechenden 2-Aminopyrazin-3-thioamide durch Oxidation zugänglich sind. Die zugrundeliegenden 2-Amino-3-cyan-pyrazine sind bekannt.

In diesem Zusammenhang ist z.B. auf folgende Literatur zu verweisen.:
DE-A- 22 48 660
Lang, Fleury, Tetrahedron Lett. 45, 3967-70 (1970)
Taylor, Kobayashi, J. Org. Chem. 38, 2817-2821 (1973)
Schoeni, Fleury, Tetrahedron 31, 671-678 (1975)
Fleury et al, Bull. Soc. Chim. 1971, 2711-16.

Den Naphtholen der Formel IV liegen bekannte Kupplungskomponenten aus der Chemie der I-Naphthole zugrunde, die durch geeignete Umsetzungen z.B. über die Sulfochloride oder Säurechloride, weiterhin über Halogenierungs- und/oder Bucherer-Reaktionen in die eigentlichen Kupplungskomponenten umgewandelt werden.

Als Ausgangsmaterialien für diese Synthesen dienen z.B.
1-Naphtholsulfonsäure-2
1-Naphtholsulfonsäure-3
1-Naphtholsulfonsäure-5
1-Naphtholsulfonsäure-6
1-Naphthylaminsulfonsäure-6,
aus der durch Chlorierung im Zug einer Bucherer-Synthese
1-Chlor-I-naphtholsulfonsäure-6 erhalten werden kann,
1-Naphtholsulfonsäure-7
1-Naphtholsulfonsäure-8
1-Naphthol-3,8-disulfonsäure
7-Acetylamino-1-naphthol-3-sulfonsäure
8-Acetylamino-2-chlor-1-naphthol-5-sulfonsäure
8-Acetylamino-1-naphthol-5-sulfonsäure
8-Benzoylamino-1-naphthol-5-sulfonsäure
8-Acetylamino-1-naphthol-2,5-disulfonsäure
5-Acetylamino-1-naphthol-3-sulfonsäure.

Im Zug der Synthese können bei Vorliegen von zwei Sulfogruppen entweder beide Sulfogruppen gemeinsam in ein Disulfochlorid umgewandelt und zu Sulfonamiden mit gleichem oder ungleichem Sulfonamidteil übergeführt werden oder die Umsetzung kann stufenweise erfolgen. So ist es z.B. möglich, die 1-Naphthol-3,8-di-sulfonsäure zum entsprechenden Naphthsultonsulfochlorid umzusetzen und dann zunächst die Sulfochloridgruppe, und darauf in einem Folgeschritt die reaktive Sultongruppe zu funktionalisieren.

Weitere Naphthole, die sich als Bausteine zur Synthese entsprechender Farbstoffe eignen, sind

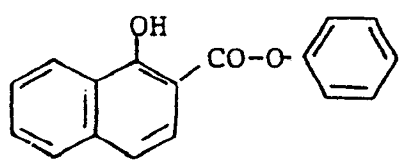

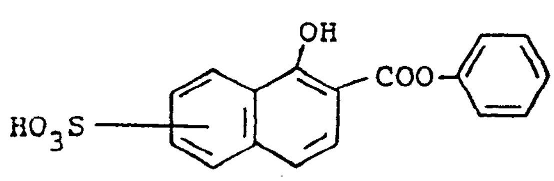

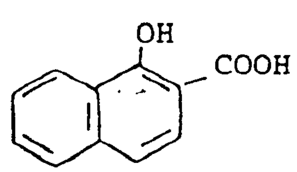

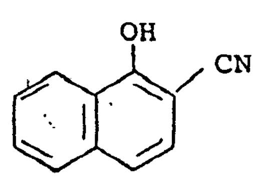

Für die Verknüpfung mit dem diffusionsfest machenden Trägerrest vorgesehene Gruppen können dabei durch nachträgliche Sulfinierung oder direkte Sulfochloridsynthese eingeführt werden.

Die entsprechenden Umsetzungen sind bekannt und bedürfen keiner detaillierten Erläuterung.

Erfindungsgemäße Farbabspalter der allgemeinen Formel II sind nachstehend in einer beispielhaften Übersicht zusammengefaßt.

Farbabspalter 1

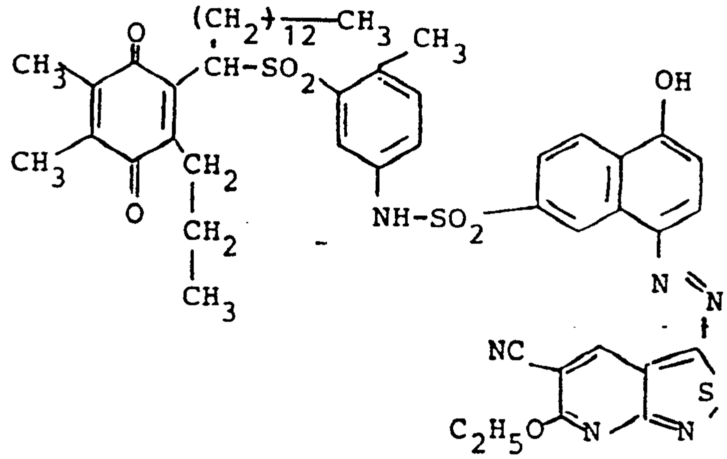

Farbabspalter 2

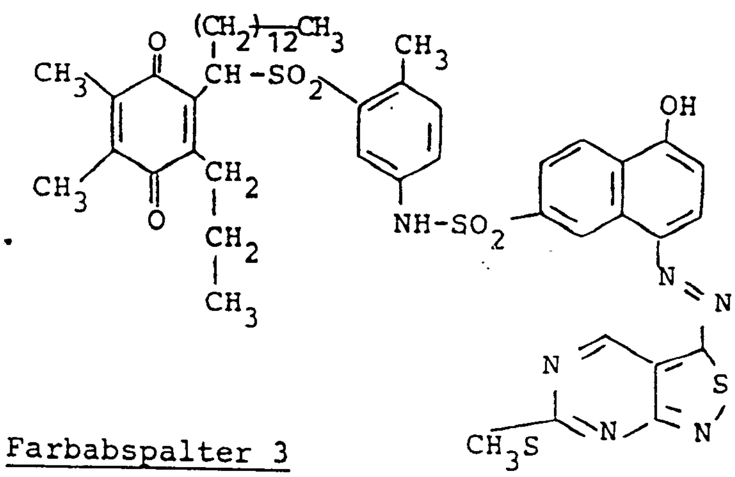

Farbabspalter 3

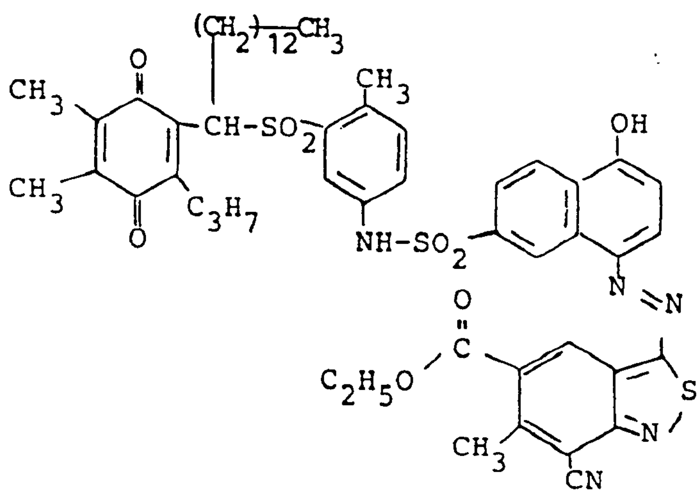

Farbabspalter 4

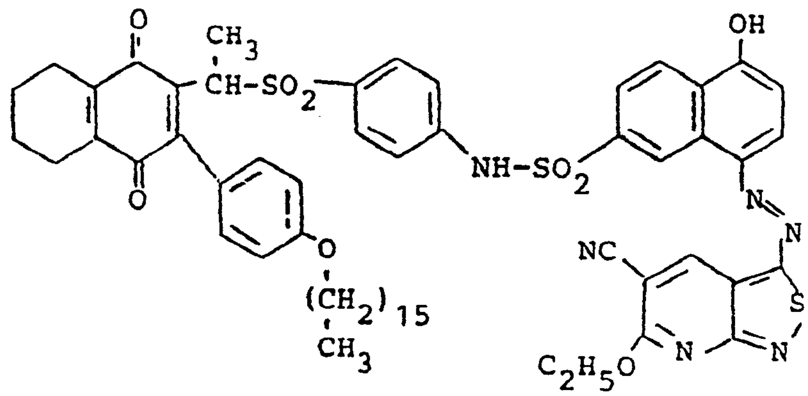

Farbabspalter 5

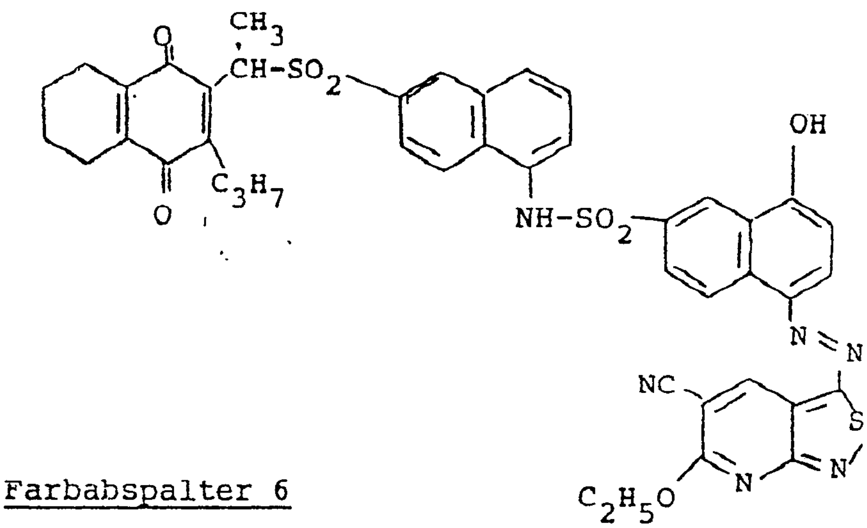

Farbabspalter 6

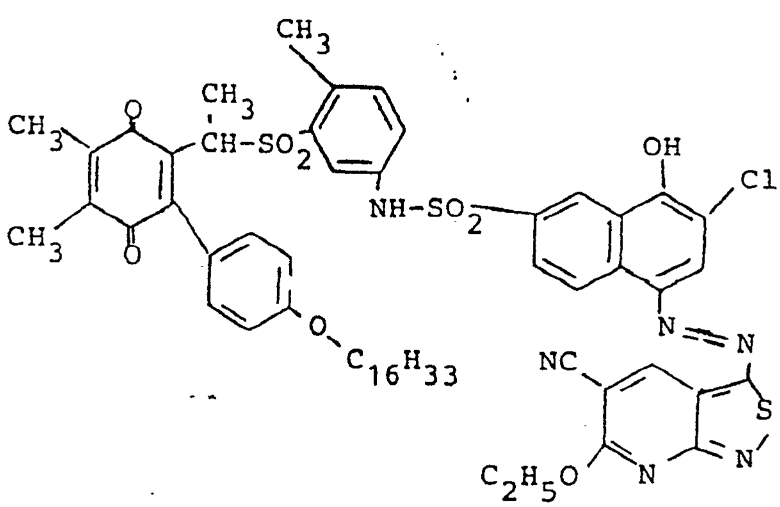

Farbabspalter 7

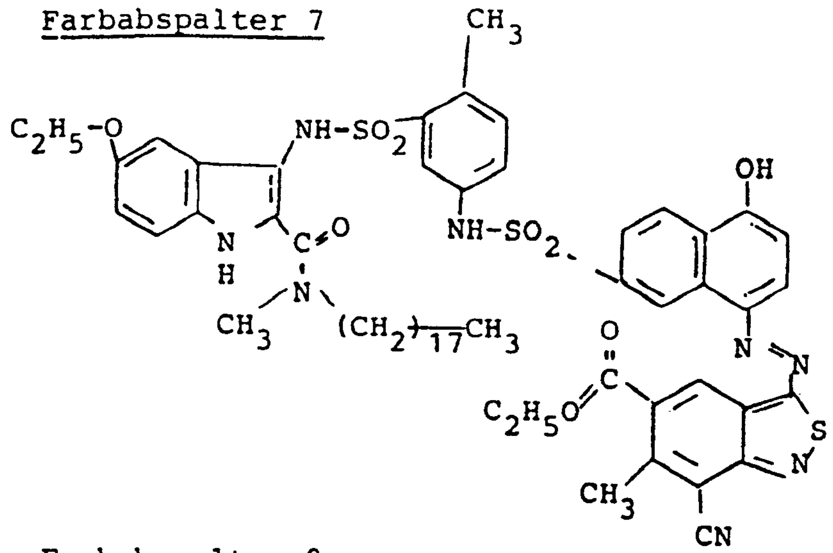

Farbabspalter 8

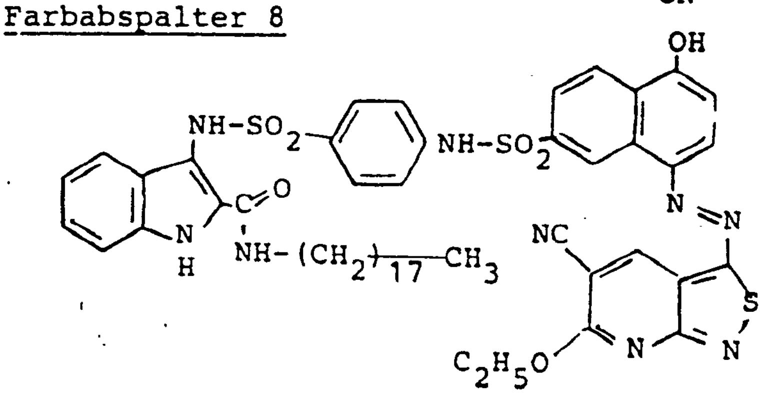

Farbabspalter 9

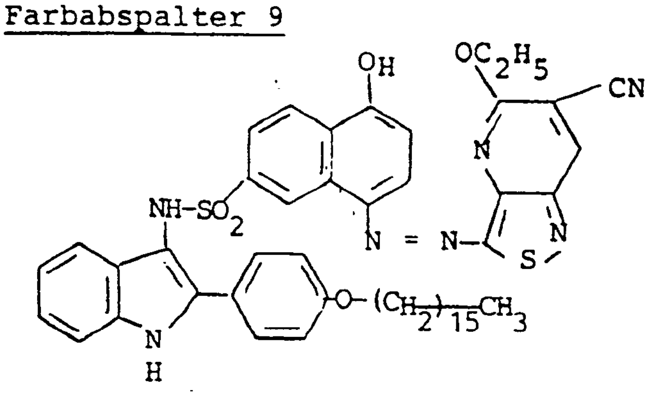

Farbabspalter 10

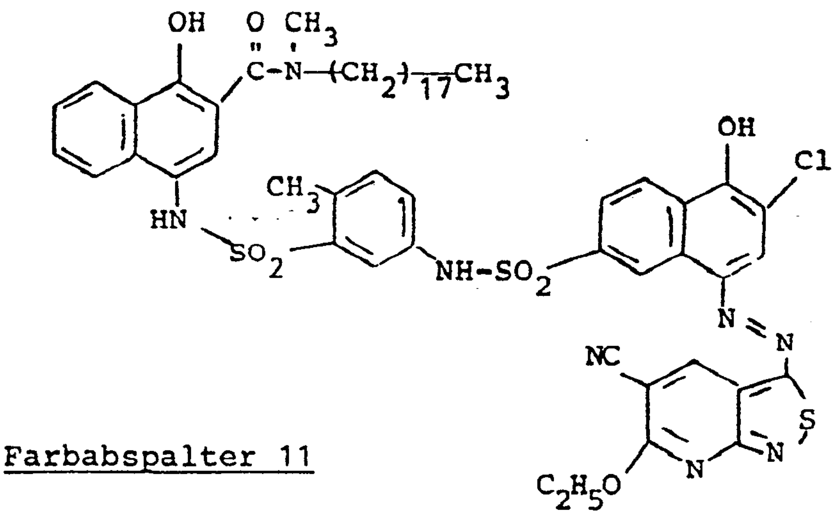

Farbabspalter 11

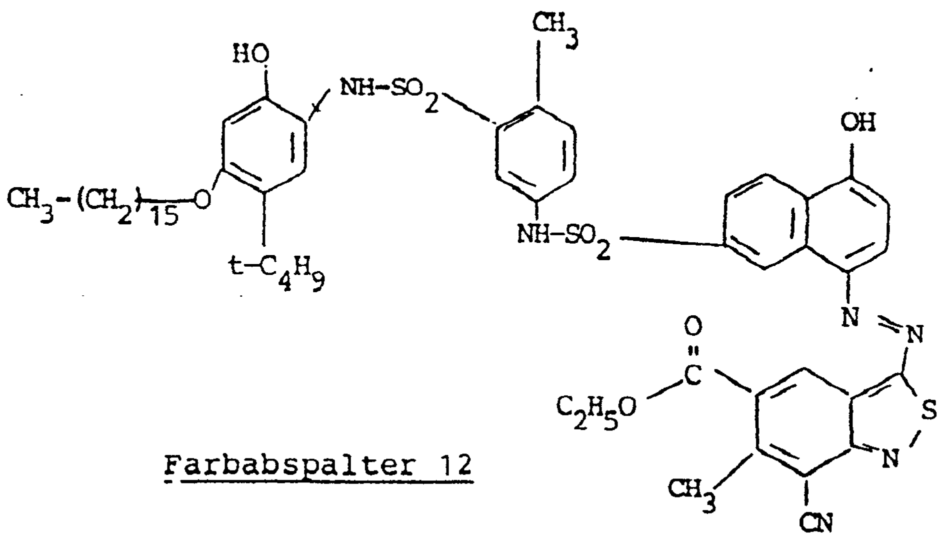

Farbabspalter 12

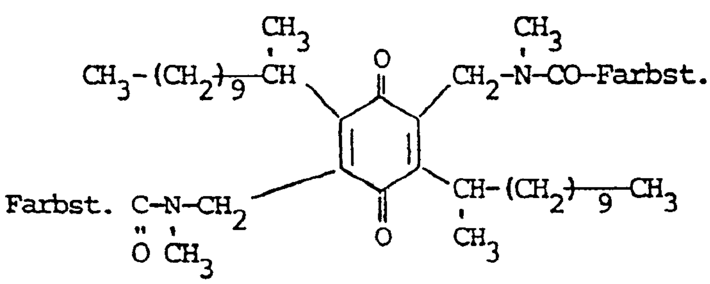

Farbstoff =

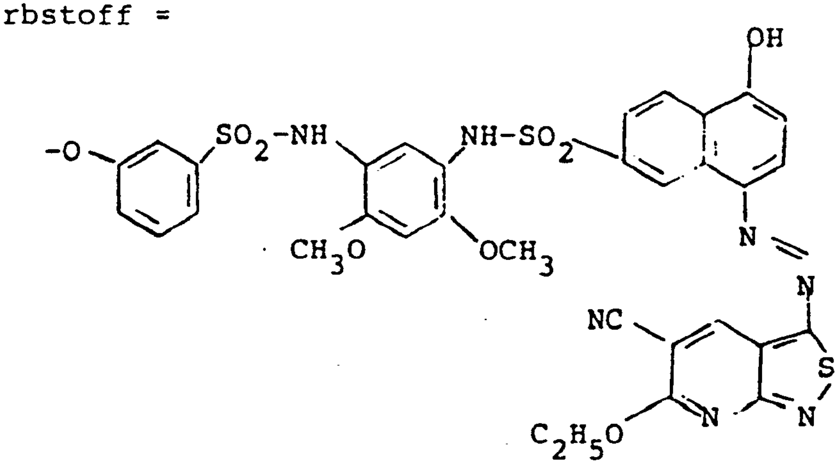

Farbabspalter 13

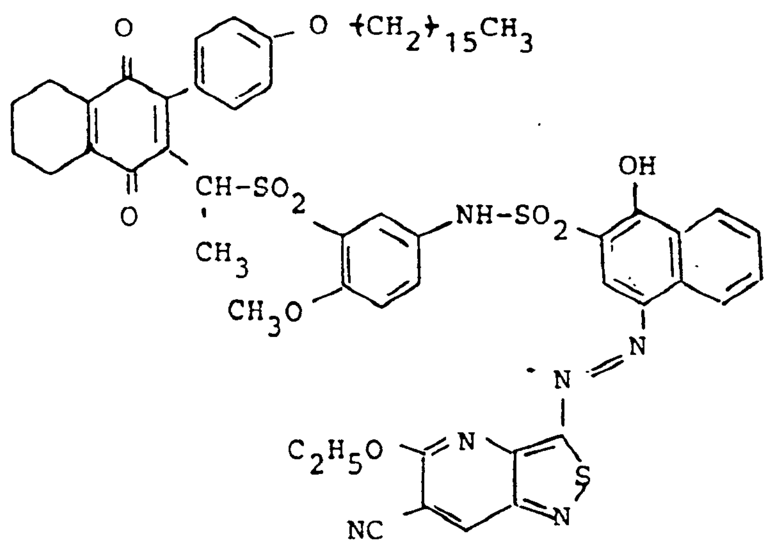

Farbabspalter 14

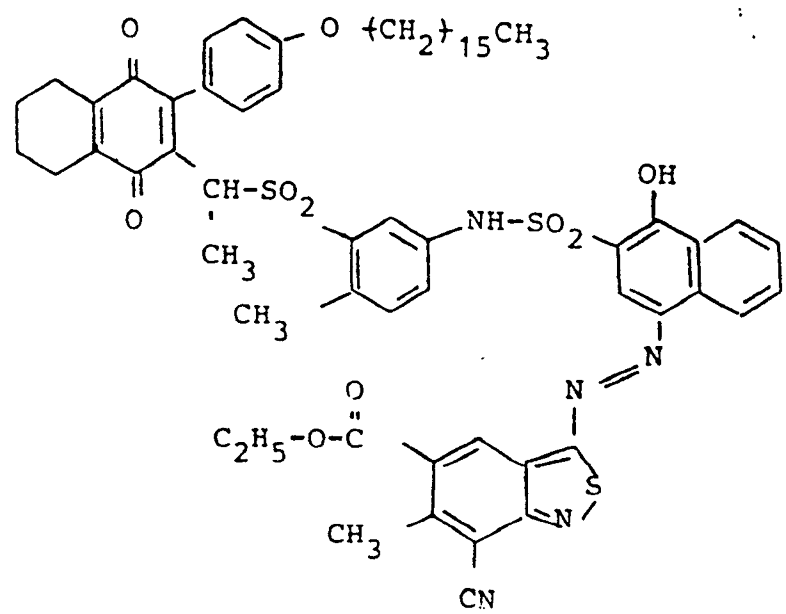

AG 1471

Farbabspalter 15

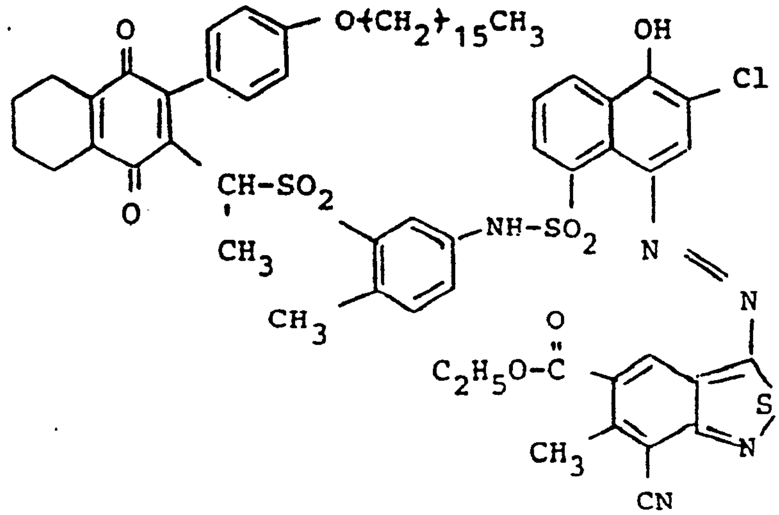

**Herstellungsbeispiele**

**Farbstoff 8**

Die Vorschrift zur Herstellung von Farbstoff 8 kann ohne Änderung der Mengenverhältnisse bzw. der molaren Verhältnisse von Diazoteil (Amin) und Kuppler (Naphthol) übernommen werden für die Farbstoffe 7, 9, 10, 16, 17, 18, 19, 21, 22, 24, 25, 26, 33, 34, 36, 37, 38, 39, 41, 42, 53, 44, 45, 49, 50.

Man löst bei 10-15°C
11 g (5 mmol) Verbindung 16 in
10 ml Orthophosphorsäure, kühlt auf 0°C, gibt
7,5 ml Propionsäure und
2,5 ml Essigsäure zu, kühlt auf -10°C und diazotiert bei -10°C bis -5°C mit
1 ml 40 prozentiger Nitrosylschwefelsäure. Man rührt 50 min nach, gibt zur Zerstörung von überschüssiger salpetriger Säure
0,1 g Harnstoff zu und tropft die Diazoniumlösung bei -10°-0°C in eine Lösung von
1,1 g (5 mmol) 1-Naphtol-6-sulfonamid in
20 ml Methylglykol. Nach 2 h wird auf 150 g Eiswasser ausgetragen. Man saugt ab, verrührt mit
200 ml Aceton, saugt erneut ab.
Der Filterkuchen ergibt nach Digestion mit 30 ml Ethylacetat und erneutem Absaugen
0,9 g reinen Farbstoff, rotbraunes Pulver.

**Farbabspalter 1**

Vorstufe 1: Na-1-acetoxynaphtalin-6-sulfonat
Man erhält
120 g (0,5 mol) Amuonium-1-naphthol-6-sulfonat und
41 g (0,5 mol) Na-acetat in
600 g Essigsäure und
600 ml Acetanhydrid
2 h unter Rückfluß, seugt nach Abkühlen auf 40°C ab, wäscht mit Ethylacetat und trocknet. Ausbeute 142 g.

Vorstufe 2: 1-Acetoxynaphthalin-6-sulfochlorid
Man trägt in
69 g Vorstufe 1 bei 50°C
50 g Phosphorpentechlorid ein und rührt 1 h bei 60°C nach. Die flüssige Mischung wird in
500 g Eis eingetregen und bis zur Beendigung der Gasentwicklung gerührt. Man extrahiert dreimal mit je
200 ml Chloroform, trocknet die neutral gewaschene Chlorformphase mit Natriumsulfat und engt ein.

Vorstufe 3

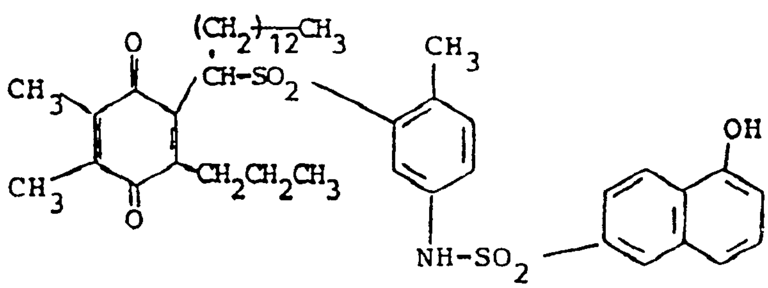

Das Ausgangsamin (Carrieramin) wird nach den Angaben der DE-A- 31 07 540, Seiten 45-46 hergestellt: 2,3-Dimethyl-5-propyl-6-[α-(2-methyl-5-aminophenyl)-sulfonyl]-tetradecylbenzochinon-1,4.

Man legt
54 3 g (100 mmol) Carrieramin in
500 ml Chloroform vor, gibt 40 ml Pyridin zu und trägt 40 ml Pyridin zu und trägt bei 25°C eine Lösung von
28,8 g (115 mmol) Vorstufe 2 in
300 ml Chloroform ein. Man rührt bei 20-25°C 2 h nach, engt ein und verrührt den Rückstand mit 500 ml Wasser. Man nimmt den kristallisieten Rückstand nach Absaugen vom Wasser in 650 ml Ethanol auf und hält 1 h mit 100 ml konzentrierter Salzsäure unter Rückfluß. Man engt erneut ein, verrührt mehrmals mit Wasser, dekantiert ab und kocht mit Methanol aus (300 ml). Beim Erkalten fällt das Produkt aus. Ausbeute 64 g (88 % d.Theorie).

**Farbabspalter 1**

Man diazotiert

6,6 g (30 mmol) Verbindung 16 in

60 ml Orthophosphorsäure und

60 ml Gemisch Propionsäure/Essigsäure 3:1 bei -10°C mit

6 ml 40 %iger Nitrosylschwefelsäure wie bei Farbstoff 8 beschrieben und tropft die von überschüssiger salpetriger Säure befreite Diazoniumlösung bei -10°C bis -5°C in eine auf -10°C gehaltene Lösung von

21,7 g (30 mmol) Vorstufe 3 in einem Gemisch von

200 ml Propionsäure,

200 ml Essigsäure und

50 ml Ethanol.

Man läßt über 3 h bei -10°C bis 0°C auskuppeln und trägt auf

1000 g Eis aus. Man rührt 20 min nach, dekantiert, wäscht mit je 200 ml Eiswasser 3 mal nach, wobei das Produkt fest wird, saugt ab, trocknet über 24 h an der Luft und reinigt durch Säulenchromatographie auf 1000 g Kieselgel Woelm (32-63 µm) mit Dichlormethan/Methanol 98:2 als Laufmittel. Aus dem Eluat erhält man nach Eindampfen

12,4 g chromatographisch einheitliche Substanz in Form eines dunkelroten Pulvers.

Nach dem gleichen Verfahren werden auch die Farbabspalter 2-6 erhalten.

Die erfindungsgemäßen Farbabspalter werden beim Farbdiffusionsübertragungsverfahren in Zuordnung zu einer lichtempfindlichen Silberhalogenidemulsionsschicht einem farbfotografischen Aufzeichnungsmaterial einverleibt. Bei monochromatischen Verfahren enthält ein solches

Aufzeichnungsmaterial mindestens eine, bei Verfahren zur Herstellung mehrfarbiger Bilder in der Regel mindestens drei lichtempfindliche Silberhalogenidemulsionsschichten, im letzteren Fall mit unterschiedlicher spektraler Empfindlichkeit, wobei erfindungsgemäß mindestens einer dieser Schichten ein Farbabspalter gemäß Formel II zugeordnet ist. Die Farbabspalter der vorliegenden Erfindung liefern bei der Entwicklung diffusionsfähige blaugrüne Farbstoffe mit hervorragender Lichtechtheit, verbesserten spektralen Eigenschaften und verminderter Empfindlichkeit gegen Reduktionsmittel. Sie sind daher bevorzugt einer rotempfindlichen Silberhalogenidemulsionsschicht zugeordnet.

Unter "Zuordnung" und "zugeordnet" wird verstanden, daß die gegenseitige Anordnung von lichtempfindlicher Silberhalogenidemulsionsschicht und Farbabspalter von solcher Art ist, daß bei der Entwicklung eine Wechselwirkung zwischen ihnen möglich ist, die eine Freisetzung des diffusionsfähigen Azofarbstoffes als Funktion der Entwicklung der Silberhalogenidemulsionsschicht zuläßt. Hierzu müssen das lichtempfindliche Silberhalogenid und der Farbabspalter nicht notwendigerweise in derselben Schicht vorliegen; sie können auch in benachbarten Schichten untergebracht sein, die jeweils der gleichen Schichteinheit angehören.

Falls es sich bei den erfindungsgemäßen Farbabspaltern um reduzierbare, reduktiv spaltbare Verbindungen handelt, die zweckmäßig gemeinsam mit ED-Verbindungen (oder deren Vorläufer, z.B. gemäß DE-A-30 06 268) verwendet werden, ist unter Zuordnung zu verstehen, daß die gegenseitige Anordnung von Silberhalogenidemulsion, ED-Verbindung bzw. ED-Vorläuferverbindung und Farbabspalter von solcher Art ist, daß eine Wechselwirkung zwischen ihnen möglich ist, die eine bildmäßige Übereinstimmung zwischen dem gebildeten Silberbild und dem Verbrauch an ED-Verbindung einerseits sowie zwischen der nicht verbrauchten ED-Verbindung und dem Farbabspalter andererseits zuläßt, so daß in Übereinstimmung mit dem nicht entwickelten Silberhalogenid eine bildweise Verteilung von diffusionsfähigem Farbstoff erzeugt wird.

Obwohl für die Einarbeitung der erfindungsgemäßen Farbabspalter die verschiedensten Methoden in Frage kommen, hat es sich als günstig erwiesen, die Farbabspalter der vorliegenden Erfindung in Form von Emulgaten unter Verwendung von sogenannten Ölbildnern in die Schichten einzuverleiben. Insbesondere bei Verwendung von reduzierbaren, reduktiv spaltbaren Farbabspaltern in Kombination mit ED-Verbindungen bietet dies den Vorteil, daß Farbabspalter und ED-Verbindungen in Form eines gemeinsamen Emulgates in besonders engen funktionellen Kontakt gebracht werden können. Geeignete Ölbildner sind beispielsweise beschrieben in US-A-2 322 027, DE-A-1 772 192, DE-A-2 042 659 und DE-A-2 049 689. Die optimalen Mengen des einzuarbeitenden Farbabspalters und gegebenenfalls der ED-Verbindung können durch einfache routinemäßige Tests ermittelt werden. Der Farbabspalter der vorliegenden Erfindung wird beispielsweise in Mengen von 0,05 - 0,2 Mol und die ED-Verbindung, falls vorhanden, in Mengen von 0,1 - 0,6 Mol pro Mol Silberhalogenid verwendet.

Die Entwicklung des bildmäßig belichteten erfindungsgemäßen farbfotografischen Aufzeichnungsmaterials wird durch Behandlung mit einer wäßrig-alkalischen, gegebenenfalls hochviskosen Entwicklerlösung eingeleitet. Die für die Entwicklung erforderlichen Hilfsentwicklerverbindungen sind entweder in der Entwicklerlösung enthalten oder können ganz oder teilweise auch in einer oder mehreren Schichten des erfindungsgemäßen farbfotografischen Aufzeichnungsmaterials enthalten sein. Bei der Entwicklung werden aus den Farbabspaltern bildmäßig diffusionsfähige Farbstoffe freigesetzt und auf eine Bildempfangsschicht übertragen, die entweder integraler Bestandteil des erfindungsgemäßen farbfotografischen Aufzeichnungsmaterials ist oder sich mit jenem zumindest während der Entwicklungszeit in Kontakt befindet. Die Bildempfangsschicht kann demnach auf dem gleichen Schichtträger angeordnet sein wie das lichtempfindliche Element oder auf einem separaten Schichtträger. Sie besteht im wesentlichen aus einem Bindemittel, das Beizmittel für die Festlegung der aus den nicht-diffundierenden Farbabspaltern freigesetzten

diffusionsfähigen Farbstoffe enthält. Als Beizmittel für anionische Farbstoffe dienen vorzugsweise langkettige quaternäre Ammonium- oder Phosphoniumverbindungen, z.B. solche, wie sie beschrieben sind in US-A-3 271 147 und US-A-3 271 148. Ferner können auch bestimmte Metallsalze und deren Hydroxide, die mit den sauren Farbstoffen schwerlösliche Verbindungen bilden, verwandt werden. Weiterhin sind hier auch polymere Beizmittel zu erwähnen, wie etwa solche, die in DE-A-23 15 304, DE-A-26 31 521 oder DE-A-29 41 818 beschrieben sind. Die Farbstoffbeizmittel sind in der Beizmittelschicht in einem der üblichen hydrophilen Bindemittel dispergiert, z.B. in Gelatine, Polyvinylpyrrolidon, ganz oder partiell hydrolysierten Celluloseestern. Selbstverständlich können auch manche Bindemittel als Beizmittel fungieren, z.B. Polymerisate von stickstoffhaltigen, gegebenenfalls quaternären Basen, wie etwa von N-Methyl-4-Vinylpyridin, 4-Vinylpyridin, 1-Vinylimidazol, wie beispielsweise beschrieben in US-A- 2 484 430. Weitere brauchbare beizende Bindemittel sind beispielsweise Guanylhydrazonderivate von Alkylvinylketonpolymerisaten, wie beispielsweise beschrieben in der US-A-2 882 156, oder Guanylhydrazonderivate von Acylstyrol-polymerisaten, wie beispielsweise beschrieben in DE-A-20 09 498. Im allgemeinen wird man jedoch den zuletzt genannten beizenden Bindemitteln andere Bindemittel, z.B. Gelatine, zusetzen.

Sofern die Bildempfangsschicht auch nach vollendeter Entwicklung in Schichtkontakt mit dem lichtempfindlichen Element verbleibt, befindet sich zwischen ihnen in der Regel eine alkalidurchlässige pigmenthaltige lichtreflektierende Bindemittelschicht, die der optischen Trennung zwischen Negativ und Positiv und als ästhetisch ansprechender Bildhintergrund für das übertragene Farbbild dient. Eine solche lichtreflektierende Schicht kann in bekannter Weise bereits in dem lichtempfindlichen farbfotografischen Aufzeichnungsmaterial vorgebildet sein oder aber in ebenfalls bekannter Weise erst bei der Entwicklung erzeugt werden. Falls die Bildempfangsschicht zwischen Schichtträger und lichtempfindlichem Element angeordnet ist und von letzterem durch eine vorgebildete lichtreflektierende Schicht getrennt ist, muß entweder der Schichtträger transparent sein, so daß das erzeugte Farbübertragsbild durch ihn hindurch betrachtet werden kann, oder das lichtempfindliche Element muß mitsamt der lichtreflektierenden Schicht von der Bildempfangsschicht entfernt werden, um letztere freizulegen. Die Bildempfangsschicht kann aber auch als oberste Schicht in einem integralen farbfotografischen Aufzeichnungsmaterial vorhanden sein, in welch letzterem Fall die Belichtung zweckmäßigerweise durch den transparenten Schichtträger vorgenommen wird.

Nach der Verarbeitung enthält die Bildempfangsschicht eine bildmäßige Verteilung von blaugrünen Monoazofarbstoffen der Formel I. Auch der zu der ursprünglich lichtempfindlichen Silberhalogenidemulsionsschicht zugeordnete Farbabspalter der Formel II liegt nach der Verarbeitung in bildmäßiger Verteilung komplementär zu dem übertragenen Farbstoffbild vor und kann in bekannter Weise ebenfalls als Farbbild nutzbar gemacht werden (retained image).

Hierbei kommt im Falle einer Verwendung in einem zur Herstellung von Papierbildern nach dem Negativerfahren vorgesehenen Colornegativfilm den erfindungsgemäßen Farbstoffen zugute, daß ihre langwellige Absorptionsbande gut mit der von chromogen erzeugten Blaugrünfarbstoffen aus naphtholischen Kupplern, wie sie in Negativfilmen überwiegend verwendet werden, übereinstimmt.

**Beispiel 1**

**Bildempfangsblatt 1**

Auf einen beidseitig mit Polyethylen beschichteten und mit einer Haftschicht versehenen Papierträger wurden folgende Schichten aufgetragen. Die Angaben beziehen sich auf 1 $m^2$.

1. Eine Beizschicht mit 6 g Beizmittel A und 5 g Gelatine.
2. Eine Härtungsschicht mit 0,1 g Gelatine und 0,15 g Härtungsmittel H.

Je 1 Streifen des erhaltenen Bildempfangsmaterials wurden in eine 0,025-molare mit 2 % Natriumhydroxid alkalisch eingestellte Farbstofflösung eingetaucht und zu einer Dichte von 1,2 - 1,5 (gemessen am Reflektionsdensitometer RD 514 / Macbeth hinter Rotfilter eingefärbt.

Es wurden folgende Farbstoffe verwendet: Farbstoffe 1-4, 7-10, 21, 22, 23, 24, 28-30, 33, 34, 44, 45 (gemäß der Erfindung) und zum Vergleich der nicht erfindungsgemäße Farbstoff B.

Nach beendeter Tauchbehandlung werden die Proben mit demineralisiertem Wasser gespült und getrocknet.

In der nachstehenden Tabelle 1 sind die Ergebnisse der spektralen Messungen zusammengefaßt, wobei für die Beurteilung des visuellen Farbeindruckes folgende Symbole verwendet werden:

bbg = Farbeindruck zu blau
bg = Farbeindruck korrekt
gbg = visuell grünstichiges Blaugrün
sk = sehr klar
k = klar
t = trüb

Aus den Daten ist zu erkennen, daß die erfindungsgemäßen Farbstoffe in ihren spektralen Daten dem vergleichbaren Farbstoff des Standes der Technik insgesamt überlegen sind.

Insbesondere sind die Nebendichten hinter Grünfilter, gemessen am Macbeth Reflektionsdensitometer RD-514, deutlich niedriger als die des Farbstoffes B. Durch den Wegfall des purpuranteils wirken die Farbstoffe insgesamt grüner.

In der letzten Spalte ist die prozentuale Farbdichteänderung bei Bestrahlung mit Xenonlicht 4,8.$10^6$ 1x.h angegeben.

In der vorletzten Spalte sind Meßwerte oberhalb 700 nm wegen apparativer Unsicherheiten in einigen Fällen nicht angegeben.

Tabelle 1

| Farbstoff | Farbeindruck | Nebendichten hinter Blaufilter ⁄¯%_7 | Nebendichten hinter Grünfilter ⁄¯%_7 | $\lambda_{max}$ ⁄¯nm_7 | Halbband breite ⁄¯nm_7 * | $\frac{\Delta D}{D_o}$ |
|---|---|---|---|---|---|---|
| B | bg | 17 | 30 | 640 | 565-685 | - 91 % |
| 1 | gbg k | | | 670 | 590-740 | |
| 2 | gbg k | | | | | |
| 3 | gbg k | | | 655 | 577-725 | |
| 4 | bbg | | | 640 | 565-605 | |
| 7 | bg k | | | | | |
| 8 | gbg sk | 17 | 23 | 655 | 576- | - 85 % |
| 9 | bg sk | | | | | |
| 10 | gbg sk | | | | | |
| 21 | bg sk | | | | | |
| 22 | gbg sk | 20 | 25 | 670 | 577- | - 87 % |
| 23 | gbg | | | 688 | 591- | - 79 % |
| 24 | bg | 23 | 32 | 690 | 570- | - 61 % |
| 28 | gbg k | 23 | 27 | 690 | 575- | - 75 % |
| 29 | gbg k | | | | | |
| 30 | gbg k | | | | | |
| 33 | gbg sk | 20 | 27 | 700 | 573- | - 67 % |
| 34 | gbg sk | | | | | |
| 44 | bg sk | 18 | 25 | 650 | 570- | - 80 % |
| 45 | gbg sk | 19 | 23 | 655 | 572- | - 91 % |

**Beispiel 2**

Beispiel 1 wird wiederholt, jedoch unter Verwendung von

**Bildempfangsblatt 2:**

1. Beizschicht mit
4 g eines zu 10 mol-% mit Chlorethanol quaternierten Polyvinylimidazols (vgl. Research Disclosure No. 22 040),
5 g Gelatine und
0,02 g Saponin.
2. Härtungsschicht wie in Beispiel 1.

Es wurden folgende Farbstoffe verwendet:
Farbstoff B (nicht erfindungsgemäß)
Farbstoffe 1, 3, 4, 8, 21, 22, 23, 24, 28, 30, 33, 44, 45 (erfindungsgemäß).
Die Prüfung erfolgte nach der in Beispiel 1 angegebenen Methode.

Tabelle 2

| Farbstoff | Farbeindruck | Nebendichten hinter Blaufilter [%] | Grünfilter [%] | $\lambda_{max}$ [nm] | Halbbandbreite [nm] | $\frac{\Delta D}{D_o}$ |
|---|---|---|---|---|---|---|
| B | bg k | 18 | 30 | 645 | 567–688 | – 20 % |
| 1 | gbg | | | | | |
| 3 | gbg | | | | | |
| 4 | bg | 22 | 30 | 650 | 570– | – 19 % |
| 8 | gb sk | 19 | 25 | 650 | 575– | – 20 % |
| 21 | gbg k | | | | | |
| 22 | gbg sk | 22 | 25 | 670 | 590– | – 40 % |
| 23 | bg k | 24 | 36 | 684 | 586– | – 18 % |
| 24 | bg k | 21 | 30 | 680 | 572– | – 15 % |
| 28 | gbg k | 20 | 21 | 680 | 590– | – 18 % |
| 30 | gbg | 25 | 25 | 690 | 580– | – 21 % |
| 33 | gbg sk | 23 | 25 | 690 | 580– | – 4 % |
| 44 | gbg k | 20 | 25 | 655 | 568–724 | – 21 % |
| 45 | gbg | 21 | 24 | 668 | 570–727 | – 11 % |
| 12 | gbg | 23 | 26 | 667 nm | | |

(aus Abspalter 1)

Die Ergebnisse von Beispiel 2 zeigen, daß auf der von vorneherein im Lichtechtheitsniveau günstigeren Bildempfangsschicht 2 im allgemeinen gleichwertige, zum Teil jedoch günstigere Lichtechtheiten erzielt werden, wenn anstelle von Blaugrünfarbstoffen des Standes der Technik (Farbstoff B) die erfindungsgemäßen Hetaroisothiazol- oder Benzisothiazol-azonaphthole eingesetzt werden.

**Beispiel 3**

Ein lichtempfindliches Element eines fotografischen Aufzeichnungsmaterials wurde hergestellt, indem auf einem transparenten Träger aus Polyethylenterephthalat folgende Schichten nacheinander aufgetragen wurden. Die Mengenangaben beziehen sich dabei jeweils auf 1 $m^2$.

Material 1 (nicht erfindungsgemäß)

1. Blausensibilisierte Emulsionsschicht mit 0,5 g (Ag) einer Silberchloridbromidiodid-Emulsion, 1,4 g Gelatine, 0,3 g Farbabspalter C (gelb) und 0,25 g ED-Verbindung F.
2. Zwischenschicht aus 0,8 g Colanyl-Gelb HR Dispergat (Fa. Hoechst), 0,1 g ED-Verbindung F und 0,8 g Gelatine.
3. Grünsensibilisierte Emulsionsschicht mit 0,36 g (Ag) einer Silberchloridbromidiodid-Emulsion, 0,92 g Gelatine, 0,18 g Farbabspalter D (purpur) und 0,14 g ED-Verbindung F.
4. Zwischenschicht aus 0,6 g Entwicklerverbindung G, 0,1 g ED-Verbindung F und 1,36 g Gelatine.
5. Rotsensibilisierte Emulsionsschicht mit 0,33 g (Ag) einer Silberchloridbromidiodid-Emulsion, 1,0 g Gelatine, 0,2 g Farbabspalter E (blaugrün) und 0,11 g ED-Verbindung F.
6. Zwischenschicht aus 0,05 g Entwicklerverbindung G und 0,39 g Gelatine.
7. Weiße Pigmentschicht aus 16,0 g $TiO_2$ und 2,3 g Gelatine.
8. Zwischenschicht aus 0,2 g Diisooctylhydrochinon und 4,0 g Gelatine.
9. Beizschicht mit 4,5 g eines zu 20 mol-% mit Chlorethanol quaternierten Polyvinylimidazols und 5,2 g Gelatine.
10. Härtungsschicht mit 1,2 g Härtungsmittel H und 0,6 g Gelatine.

In gleicher Weise wurden erfindungsgemäße Materialien hergestellt, die sich von Material 1 dadurch unterschieden, daß die rotsensibilisierte Emulsionsschicht (Schicht 5) anstelle des Farbabspalters E einen Farbabspalter der vorliegenden Erfindung enthielt, und zwar

Material II - 0,23 g Farbabspalter 1
Material III - 0,23 g Farbabspalter 2
Material IV - 0,33 g Farbabspalter 3
Material V - 0,27 g Farbabspalter 13

Für die Entwicklung wurde folgender Aktivator eingesetzt:

Kaliumhydroxid 40 g
Kaliumbromid 3 g
2,2-Methylpropyl-1,3-propandiol 25 g
1,4-Cyclohexandimethanol (50 %) 20 g
Wasser 912 g

Die Materialien wurden hinter einem Graukeil belichanschließend 2 min in dem angegebenen Aktivator entwickelt, 5 min gewässert und getrocknet. An den verarbeiteten Materialien wurden durch Messung hinter Rotfilter die Dmin- und Dmax-Werte sowie Lichtechtheit (Xenotestgerät - $7{,}2.10^6$ 1x.h) und Darkfading (100 h Lagerung bei 35°C und 90 % rel. Feuchte) ermittelt (Tab. 3).

Tabelle 3

| Material | $D_{max}$ | $D_{min}$ | Lichtechtheit $\frac{\Delta D}{D_o}$ ($7,2.10^6$ lx.h) bei d = 0,6 | bei D = 1,2 | $\lambda_{max}$ | Darkfading $\frac{\Delta D}{D_o}$ (100 h; 35°C; 90 % r.F.) |
|---|---|---|---|---|---|---|
| I | 2.09 | 0.15 | - 18 % | - 19 % | 640 | - 21 % |
| II | 1.68 | 0.17 | - 10 % | - 10 % | 667 | - 0,6 % |
| III | 2.17 | 0,19 | - 4 % | - 7 % | 654 | - 3,8 % |
| IV | 2.10 | 0,12 | - 14 % | - 11 % | 670 | + 7,7 % |
| V | 1.21 | 0,15 | - 12 % | - 4 % | 650 | + 9,7 % |

Aus Tabelle 3 ist ersichtlich, daß bei Verwendung der erfindungsgemäßen Farbabspalter die Lichtechtheit verbessert wird und das Darkfading im Tropenschrank vollständig vermieden wird. Weiterhin fällt bei der Prüfung von Filterbelichtungen hinter Blau-, Grün- und Rotfilter auf, daß die Wiedergabe von grünen Feldern bei Verwendung erfindungsgemäßer Farbstoffe deutlich verbessert wird, ohne daß das Blaufeld abtrübt.

## Formelanhang

### Beizmittel A

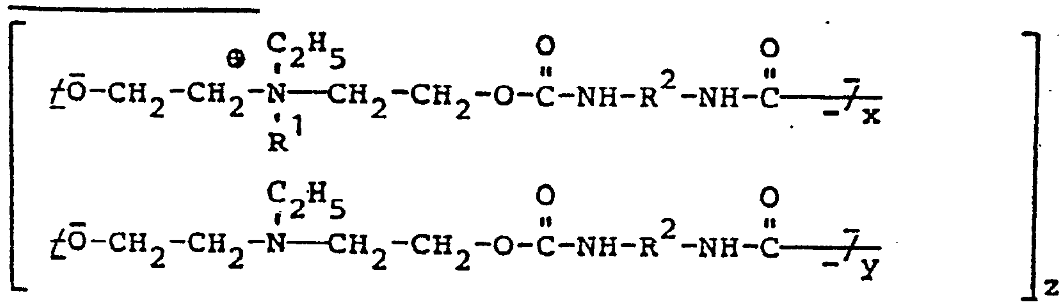

z 50 % $C_2H_5-O-SO_3^{\ominus}$

50 % $Cl^{\ominus}$

x 90 %

y 10 %

$R^1$ 50 % $-C_2H_5$

50 % 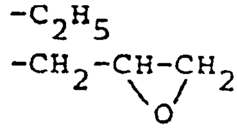

$R^2$ 70 % 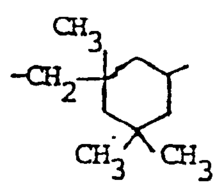

30 % 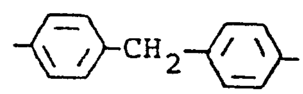

### Farbstoff B

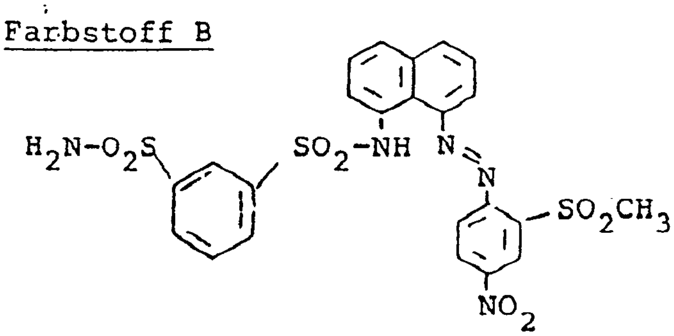

Formelanhang (Fortsetzung)

Farbabspalter C (gelb)

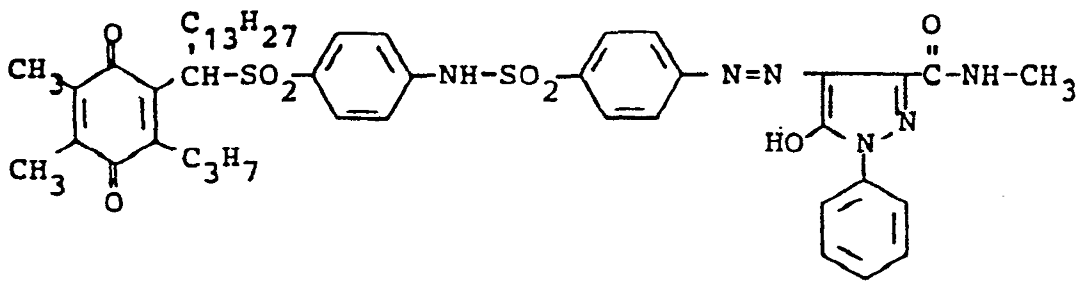

Farbabspalter D (purpur)

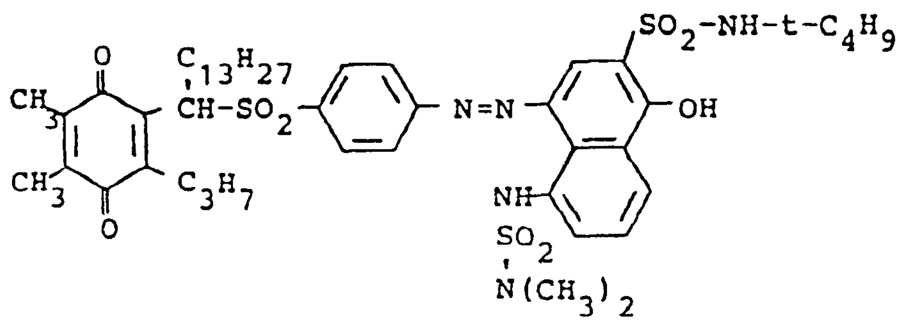

Farbabspalter E (blaugrün)

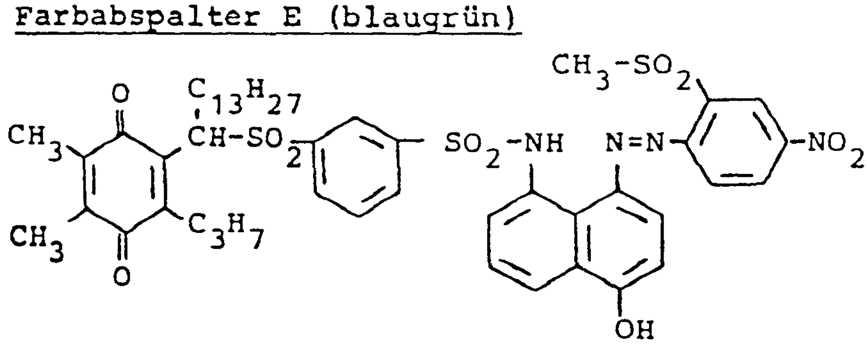

ED-Verbindung F

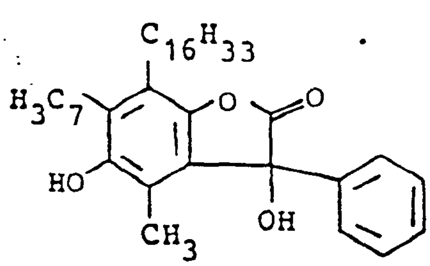

Formelanhang (Fortsetzung)

Entwicklerverbindung G

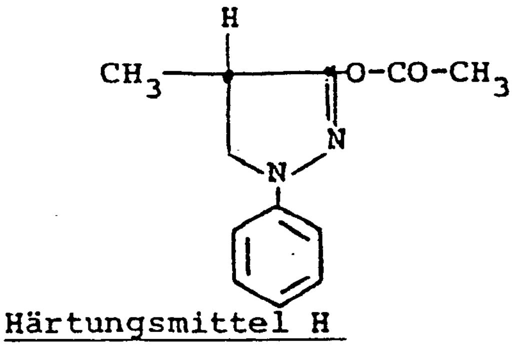

Härtungsmittel H

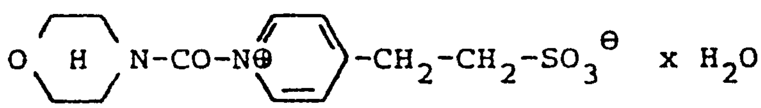

**Patentansprüche**

1. Farbfotografisches Aufzeichnungsmaterial für die Herstellung farbiger Bilder nach dem Farbdiffusionsübertragungsverfahren, das zugeordnet zu mindestens einer lichtempfindlichen Silberhalogenidemulsionsschicht eine nicht diffundierende farbgebende Verbindung (Farbabspalter) enthält, aus der unter den Bedingungen der alkalischen Entwicklung als Funktion der Entwicklung der Silberhalogenidemulsionsschicht ein diffusionsfähiger Azofarbstoff freigesetzt wird, dadurch gekennzeichnet, daß der Azofarbstoff der folgenden Formel 1 entspricht:

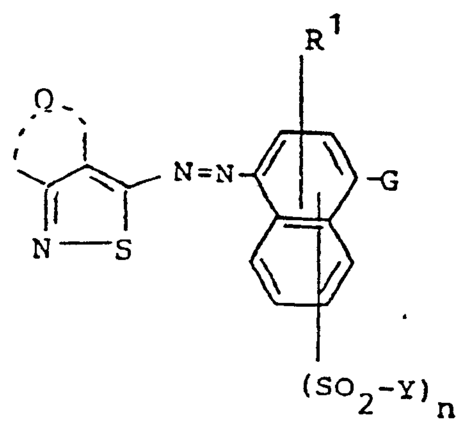

I,

worin bedeuten

Q den zur Vervollständigung eines ankondensierten Benzol- oder Thiophenrestes, welcher zusätzliche Gruppen mit Elektronenakzeptorcharakter enthält, oder zur Vervollständigung eines ankondensierten Pyridin-, Pyrimidin-, Pyridazin-, Pyrazin- oder Thiazolringes erforderlichen Molekulrest;

G -OH oder Acyloxy;
$R^1$ H oder einen oder zwei gleiche oder verschiedene Reste und zwar Halogen, Acyl, Acylamino oder -CN;
Y H, -OH, eine gegebenenfalls durch Alkyl oder Aryl substituierte Aminogruppe, eine cyclische Aminogruppe oder eine Gruppe der Formel $-NH-SO_2-R$ ,;
$R^2$ Alkyl, Aryl, eine gegebenenfalls zweifach durch Alkyl substituierte Aminogruppe oder eine cyclische Aminogruppe;
n 0, 1 oder 2.

2. Farbbild, bestehend aus einer auf einem Schichtträger angeordneten bildmäßigen Verteilung eines Anions aus einem blaugrünen Monoazofarbstoff der folgenden Formel

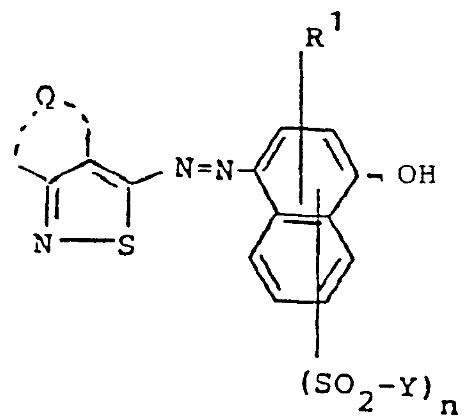

I.

worin bedeuten
Q den zur Vervollständigung eines ankondensierten Benzol- oder Thiophenrestes, welcher zusätzliche Gruppen mit Elektronenakzeptorcharakter enthält, oder zur Vervollständigung eines ankondensierten Pyridin-, Pyrimidin-, Pyridazin-, Pyrazin- oder Thiazolringes erforderlichen Molekülrest;
$R^1$ H oder einen oder zwei gleiche oder verschiedene Reste und zwar Halogen, Acyl, Acylamino oder -CN;
Y H, -OH, eine gegebenenfalls durch Alkyl oder Aryl substituierte Aminogruppe, eine cyclische Aminogruppe, oder eine Gruppe der Formel $-NH-SO_2-R^2$;
$R^2$ Alkyl, Aryl, eine gegebenenfalls zweifach durch Alkyl substituierte Aminogruppe oder eine cyclische Aminogruppe;
n 0, 1 oder 2.

3. Monoazofarbstoff der Formel

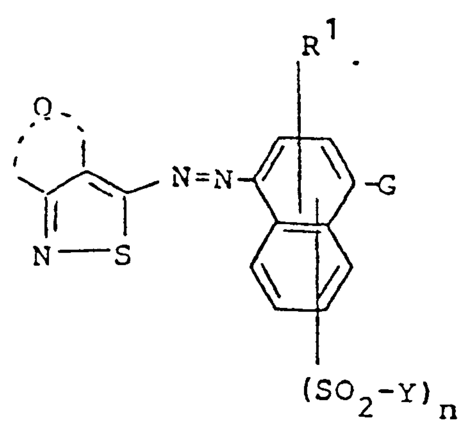

worin bedeuten
G -OH oder Acyloxy;
Q den zur Vervollständigung eines ankondensierten Benzol- oder Thiophenrestes, welcher zusätzliche Gruppe mit Elektronenakzeptorcharakter jedoch keine Sulfogruppe enthält, oder zur Vervollständigung eines ankondensierten pyridin-, Pyrimidin-, Pyridazin-, Pyrazin- oder Thiazolringes erforderlichen Molekülrest,
$R^1$ H oder einen oder zwei gleiche oder verschiedene Reste und zwar Halogen, Acyl, Acylamino oder -CN;
Y H, -OH, eine gegebenenfalls durch Alkyl und/oder Aryl substituierte Aminogruppe, eine cyclische Aminogruppe, oder eine Gruppe der Formel $-NH-SO_2-R$;
$R^2$ Alkyl, Aryl, eine gegebenenfalls zweifach durch Alkyl substituierte Aminogruppe oder eine cyclische

Aminogruppe;
n 1 oder 2.

## Claims

Colour photographic recording material for the production of coloured images by the dye diffusion transfer process, which contains, in association with at least one photosensitive silver halide emulsion layer, a non-diffusing colour-providing compound dye releaser), from which a diffusible azo dye is released under the conditions of alkaline development as a function of the development of the silver halide emulsion layer, characterised in that the azo dye corresponds to the following formula I:

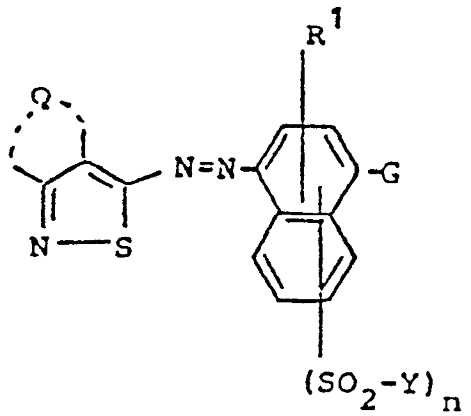

I,

wherein

Q denotes the remainder of the molecule required to complete a fused-on benzene or thiophene radical, which contains additional groups having an electron acceptor character, or to complete a fused-on pyridine, pyrimidine, pyridazine, pyrazine or thiazole ring. G denotes -OH or acyloxy:

$R^1$ denotes H or one or two identical or different radicals, namely halogen, acyl, acylamino or -CN;

Y denotes H, -OH, an optionally alkyl- or aryl-substituted amino group, a cyclic amino group or a group of the formula $-NH-SO_2-R^2$;

$R^2$ denotes alkyl, aryl, an amino group optionally disubstituted by alkyl or a cyclic amino group; and

n denotes 0, 1 or 2.

2. Coloured image consisting of an imagewise distribution on a layer support of an anion of a cyan monoazo dye of the following formula

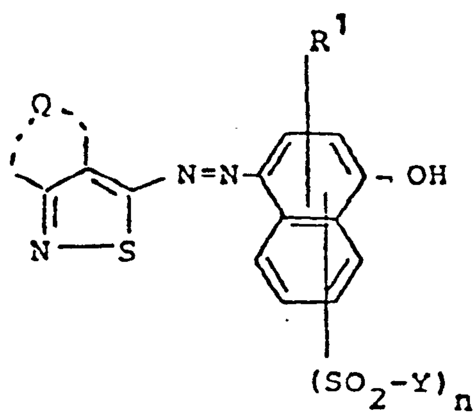

I.

wherein

Q denotes the remainder of the molecule required to complete a fused-on benzene or thiophene radical, which contains additional groups having an electron acceptor character, or to complete a fused-on pyridine, pyrimidine, pyridazine, pyrazine or thiazole ring;

$R^1$ denotes H or one or two identical or different radicals, namely halogen, acyl, acylamino or -CN;

Y denotes H, -OH, an optionally alkyl- or aryl-substituted amino group, a cyclic amino group or a group of the formula $-NH-SO_2-R^2$;

$R^2$ denotes alkyl, aryl, an amino zroup optionally disubstituted by alkyl or a cyclic amino group; and

n denotes 0, 1 or 2.

3. Monoazo dye of the formula

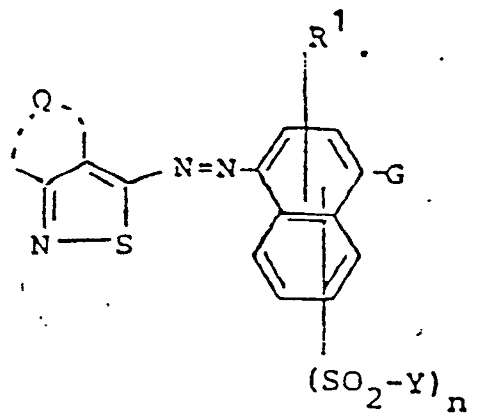

wherein

G denotes -OH or acyloxy;

Q denotes the remainder of the molecule required to complete a fused-on benzene or thiophene radical, which contains additional groups having anelectron acceptor character but not a sulpho qroup, or to complete a fused-on pyridine, pyrimidine, pyridazine, pyrazine or thiazole ring;

$R^1$ denotes H or one or two identical or different radicals, namely halogen, acyl, acylamino or -ON;

Y denotes H, -OH, an optionally alkyl- and/or aryl-substituted amino group, a cyclic amino group or a group of the formula $-NH-SO_2-R^2$;

$R^2$ denotes alkyl, aryl, an amino group optionally disubstituted by alkyl or a cyclic amino group; and

n denotes 1 or 2.

**Revendications**

1. Support photographique d'enregistrement pour la production d'images en couleur par le procédé de transfert par diffusion de couleur, qui contient, associé à au moins une couche photosensible d'émulsion à l'halogénure d'argent, un composé chromogéne (générateur de couleur) non diffusible, duquel est libéré un colorant azoïque diffusible dans les conditions du développement alcalin en tant que fonction du développement de la couche d'émulsion à l'halogénure d'argent, caractérisé en ce que le colorant azoique répond à la formule I suivante

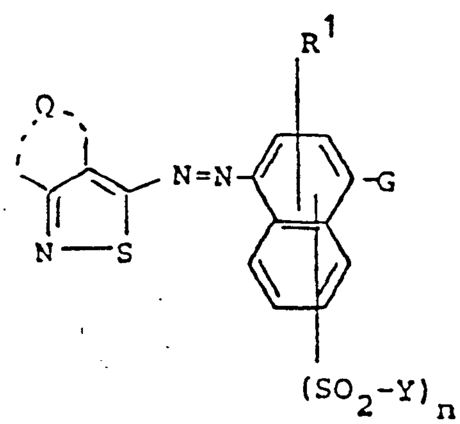

I,

dans laquelle

Q désigne le reste de molécule nécessaire pour compléter un reste benzène ou thiophène condensé, qui contient d'autres groupes à caractère d'accepteur d'électrons, ou pour compléter un noyau pyridine, pyrimidine, pyridazine, pyrazine ou thiazole condensé;

G est un groupe -OH ou acyloxy,

$R^1$ représente H ou désigne un ou deux restes identiques ou différents, à savoir halogéno, acyle, acylamino

ou -CN;

Y représente H, -OH, un groupe amino éventuellement substitué par un radical alkyle ou aryle, un groupe amino cyclique ou un groupe de formule $-NH-SO_2-R^2$

$R^2$ est un groupe alkyle, aryle, un groupe amino éventuellement substitué deux fois par un radical alkyle, ou un groupe amino cyclique;

n a la valeur 0, 1 ou 2.

2. Image en couleur, constituée par une répartition selon l'image, disposée sur un support de couche, d'un anion dérivé d'un colorant mono-azoïque vert-bleu de formule suivante:

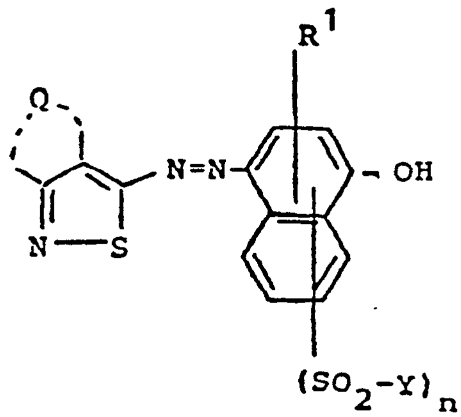

I.

dans laquelle

Q désigne le reste de molécule nécessaire pour compléter un reste benzène ou thiophène condensé, qui contient d'autres groupes à caractère d'accepteur d'électrons, ou pour compléter un noyau pyridine, pyrimidine, pyridazine, pyrazine ou thiazole condensé;

$R^1$ représente H ou désigne un ou deux restes identiques ou différents, à savoir halogéno, acyle, acylamino ou -CN;

Y représente H, -OH, un groupe amino éventuellement substitué par un radical alkyle ou aryle, un groupe amino cyclique ou un groupe de formule $-NH-SO_2-R^2$;

$R^2$ est un groupe alkyle, aryle, un groupe amino éventuellement substitué deux fois par un radical alkyle, ou un groupe amino cyclique

n a la valeur 0, 1 ou 2.

3. Colorant mono-azoique de formule

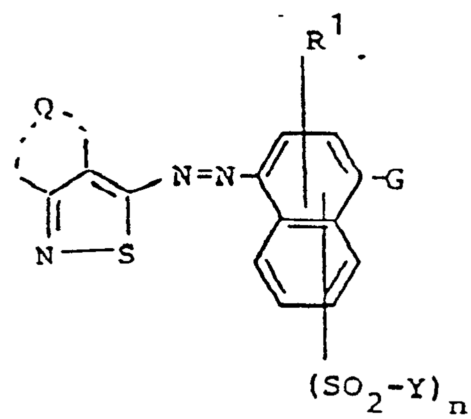

dans laquelle

G est un groupe -OH ou acyloxy,

Q désigne le reste de molécule nécessaire pour compléter un reste benzène ou thiophène condensé, qui contient d'autres groupes à caractère d'accepteur d'électrons, mais aucun groupe sulfo pour compléter un noyau pyridine, pyrimidine, pyridazine, pyrazine ou thiazole condensé;

$R^1$ représente H ou désigne un ou deux restes identiques ou différents, à savoir halogéno, acyle, acylamino ou -CN;

Y représente H,-OH, un groupe amino éventuellement substitué par un radical alkyle ou aryle, un groupe amino

cyclique ou un groupe de formule $-NH-SO_2-R^2$;

$R^2$ est un groupe alkyle, aryle, un groupe amino éventuellement substitué deux fois par unradical alkyle, ou un groupe amino cyclicue;

n a la valeur 1 ou 2.

FIG43/240